# EUROPEAN PATENT SPECIFICATION

(11) **EP 0 747 748 B1**
(45) Date of publication and mention of the grant of the patent: **02.02.2005**
(21) Application number: 95938041.1
(22) Date of filing: 21.11.1995
(51) Int. Cl.: G02F 1/133, G09G 3/36

(54) **LIQUID CRYSTAL DRIVING DEVICE, LIQUID CRYSTAL DISPLAY DEVICE AND LIQUID CRYSTAL DRIVING METHOD**
FLÜSSIGKRISTALLSTEUERGERÄT, FLÜSSIGKRISTALLANZEIGEGERÄT UND FLÜSSIGKRISTALLSTEUERUNGSVERFAHREN
DISPOSITIF D'EXCITATION DE CRISTAUX LIQUIDES, DISPOSITIF D'AFFICHAGE A CRISTAUX LIQUIDES ET PROCEDE D'EXCITATION DE CRISTAUX LIQUIDES

(30) Priority: 21.11.1994 JP 31114694; 15.06.1995 JP 17403195
(43) Date of publication of application: 11.12.1996
(73) Proprietor: SEIKO EPSON CORPORATION, Tokyo 163-08 (JP)
(72) Inventor: OZAWA, Tokuroh, Suwa-shi, Nagano 392 (JP)
(74) Representative: Hoffmann, Eckart, Dipl.-Ing.
(86) International application number: PCT/JP1995/002369
(87) International publication number: WO 1996/016347

(56) References cited:
- EP-A- 0 483 972
- EP-A- 0 601 713
- FR-A- 2 698 202
- JP-A- 2 226 975
- JP-A- 6 075 543
- JP-A- 7 191 303
- H. OHSHIMA ET AL: "Poly-Si TFT and Driver Integration Technology" ELECTRONICS & COMMUNICATIONS IN JAPAN, PART II - ELECTRONICS, vol. 77, no. 7, July 1994, NEW YORK US, pages 46-54, XP000493755
- S. SAKAI ET AL: "A 10-In. Diagonal Active-Matrix Monochrome Liquid-Crystal Display" REVIEW OF THE ELECTRICAL COMMUNICATION LABORATORIES, vol. 36, no. 4, July 1988, TOKYO JP, pages 395-401, XP000098374

## Description

### Field of Technology

This invention pertains to a driving method for a liquid crystal panel and, in particular, a driving method for a TFT liquid crystal panel.

### Background Technology

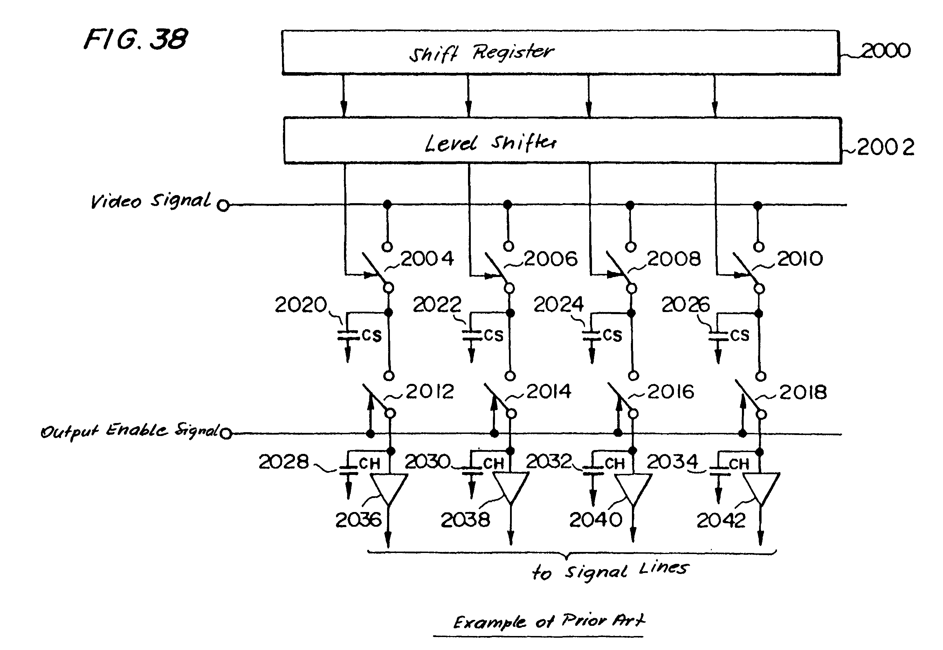

A number of different driving methods for TFT liquid crystal panels are already known. For example, as stated in "Doraiba LSI no kadai wa teiden'atsu tan'itsu dengenka de kaiketsu" ("Driver LSI problems solved by low voltage single power supply"), *Flat Panel Display 1991* (November 26, 1990, Nikkei Business Publications, Inc., p. 168 to p. 172), TFT liquid crystal panel drivers (liquid crystal driving devices) can be broadly divided into two types: digital and analog. The typical structure of a conventional analog line sequential driver is shown in Figure 38. This conventional driver contains shift register 2000, level shifter 2002, switches (analog switches) 2004 to 2018, sampling capacitors 2020 to 2026, hold capacitors 2028 to 2034, and analog buffers 2036 to 2042. Shift register 2000 shifts in synchronization with the shift clock, the output is input into level shifter 2002, and the voltage is shifted. Switches 2004 to 2010 are sequentially turned off (opened) based on the output of level shifter 2002, resulting in the sequential sampling of video signals by capacitors 2020 to 2026. When video signal sampling is finished, the output enable signal becomes valid and switches 2012 to 2018 simultaneously turn on (close). When this happens, the sampled voltages are held by capacitors 2028 to 2034 through capacitive coupling between capacitors. The voltage that is held is then buffered by analog buffers 2036 to 2042 and is output to the signal lines of the liquid crystal panel as display signals. Analog buffers 2036 to 2042 are constructed, for example, by connecting operational amplifiers to voltage followers.

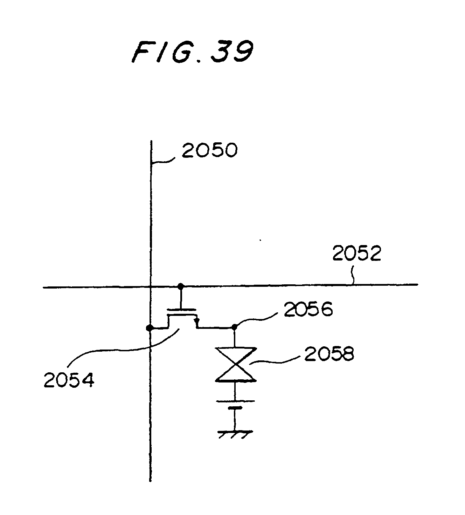

The configuration of the pixel region of the liquid crystal panel is shown in Figure 39. Signal line 2050 is connected to the source region of TFT (thin film transistor) 2054, scan line 2052 is connected to the gate electrode of TFT 2054, and pixel electrode 2054 is connected to the drain region of TFT 2054. When TFT 2054 is selected by scan line 2052, the voltage difference between the voltage applied to pixel electrode 2056 and the counter voltage (common voltage) applied to the counter electrode is supplied to liquid crystal element 2058, thereby driving liquid crystal element 2058.

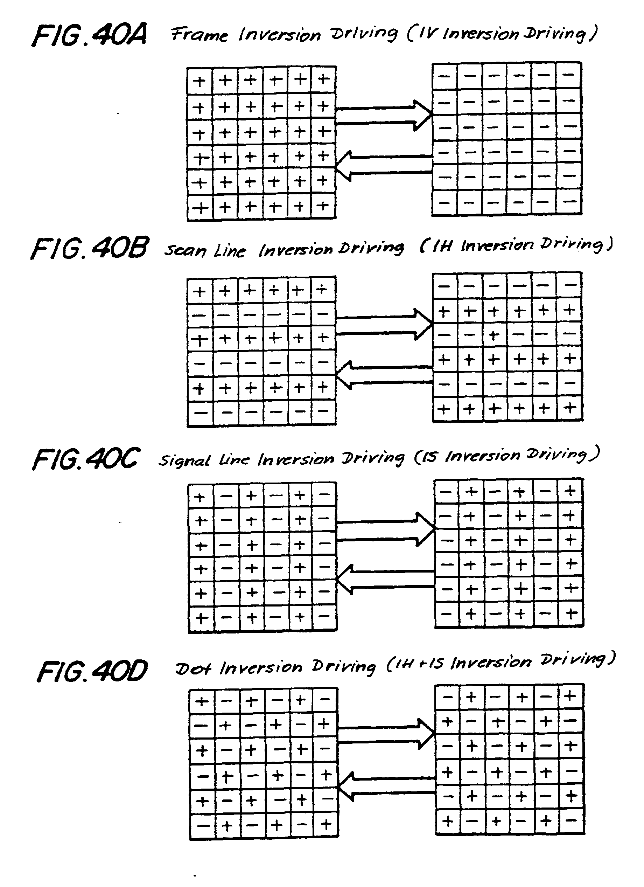

Liquid crystal elements degrade when direct current voltage is applied to them for extended periods. This property makes necessary a driving means in which the polarity of the voltage applied to the liquid crystal elements is inverted after a specified period of time. As shown in Figure 40 A to Figure 40 D, such known driving methods include frame inversion driving (hereafter referred to as "1V inversion driving" for the sake of convenience), scan line inversion driving (hereafter referred to as "1H inversion driving" for the sake of convenience), signal line inversion driving (hereafter referred to as "1S inversion driving" for the sake of convenience), and dot inversion driving (hereafter referred to as "1H + 1S inversion driving" for the sake of convenience).

In 1V inversion driving, as shown in Figure 40 A, the polarity of the applied voltage in all pixels is the same within a single vertical scanning period (1 field, 1 frame); and the polarity of all pixels is inverted after each vertical scanning period. While 1V inversion driving has the advantage of having driver circuits that are simple and easy to control and, moreover, does not suffer from line nonuniformity, this driving means does suffer from extremely conspicuous screen flicker.

In 1H inversion driving, as shown in Figure 40 B, the polarity of the applied voltage differs for each scan line; and, under these conditions, polarity is inverted after each vertical scanning period. The advantage of 1H inversion driving is that flicker is not conspicuous and cross-talk in the vertical direction is inhibited. Conversely, however, it suffers from the drawbacks of susceptibility to horizontal cross-talk and visible horizontal stripes in video displays. This driving method is particularly effective when employing non-linear active elements (such as polycrystalline TFTs and MIMs, for example) with large off leakage currents. Large liquid crystal panels, however, suffer from a brightness gradient problem caused by parasitic resistance of the interconnect electrodes. The brightness gradient problem cannot be solved by means of 1H inversion driving.

In 1S inversion driving, as shown in Figure 40 C, the polarity of the applied voltage differs for each signal line; and, under these conditions, polarity is inverted after each vertical scanning period. The advantage of 1S inversion driving is that flicker is not conspicuous and cross-talk in the horizontal direction is inhibited. Conversely, however, it suffers from the drawbacks of susceptibility to vertical cross-talk and visible vertical stripes in video displays. Although it is possible solve the brightness gradient problem mentioned above, using elements which have large off leakage currents leads to undesirable effects.

In 1H + 1S inversion driving, the polarity of the applied voltage differs for each pixel; and, under these conditions, polarity is inverted after each vertical scanning period. 1H + 1S inversion driving is disclosed in, for example, *"Dotto hanten kudou de gashitsu wo koujou shita 13 inchi EWS-you kousaido TFT ekishou paneru"* ("A 13-inch EWS high-definition TFT liquid crystal panel with improved picture quality by means of dot inversion driving" ), *Flat Panel Display 1993* (December 10, 1992, *Nikkei Business Publications, Inc*., pages 120 to 123). This method has the advantages of both 1H inversion driving and 1S inversion driving; it also has the drawbacks of both. Further, the realization of this method means that the configuration and control of the driver circuits become extremely complex, thus creating the disadvantages of longer design times and higher device costs.

As described above, each of the said four driving methods has both advantages and disadvantages. Hence, the question of which of these four driving methods to use is determined by considering such things as the type and performance of non-linear active elements, the size of the liquid crystal panel, the targeted display quality, the cost of the device, and a variety of other design conditions. However, these design conditions are sometimes changed in the development process; and a change in any of the said design conditions after one of the said four methods has already been adopted will also necessitate a change in the driving method, a matter that requires tremendous labor for circuit changes and such. Therefore, a liquid crystal driver that can easily accommodate these types of design changes is desirable.

If a liquid crystal driver is to be supplied as a standard device, it should have a high degree of general versatility so that it may accommodate all users. Users of liquid crystal drivers, however, employ a variety of driving methods, such as those above. In addition to the variety of driving methods, moreover, is a wide variety of performance (operating speed, number of signal lines, etc.) requirements for liquid crystal drivers. Consequently, it has been difficult to supply a highly versatile, standard liquid crystal driver capable of answering the demands of all users. Yet this problem could also be solved if one were able to offer a liquid crystal driver that realizes all four of the said driving methods on one device without unduly enlarging the circuit.

In addition, analog buffers 2036 to 2042 (see Figure 38), which are used in the liquid crystal driver, need to have a wide output voltage range (operating range). This is because a wide output voltage range facilitates the making of a liquid crystal panel capable of displaying multiple gray-scale levels. To obtain a wide output voltage range, it is necessary to widen the range of the supply voltage that is supplied to the analog buffers. However, to achieve this, a manufacturing process resulting in a high breakdown voltage must be used, which leads to the problems of increased circuit size and higher costs. For example, Japanese Patent Application JP 6-222741 discloses technology of the prior art which generates a high quality display in multiple gray-scale levels using low voltage drivers. In the technology of the prior art, however, liquid crystal drivers and other peripheral circuits are not integrated on the liquid crystal panel, and analog buffers are comprised not of TFTs but of single crystal CMOS transistors. In addition, the characteristics of analog buffers comprised of TFTs, and those of analog buffers comprised of single crystal CMOS transistors differ in various respects, including such things as the width of the linear region in input-output characteristics, allowable supply voltage ranges, and offset values. Therefore, even if the said technology of the prior art were applied to an analog buffer comprised of TFTs, a high quality display having multiple gray-scale levels could not be obtained. In addition, there has been absolutely no disclosure in the prior art regarding the idea for a liquid crystal driver capable of using the four driving methods together; and, moreover, the said technology of the prior art is related to digital liquid crystal drivers, not to analog line sequential drivers.

In addition, analog buffers contained in liquid crystal drivers are provided for each individual signal line of the liquid crystal panel, making the number of buffers extremely large. For example, a 480 x 640 dot full-color liquid crystal panel requires a minimum of 640 x 3 analog buffers. Also, since analog buffers pass electric current from integrated constant current supplies, there is the additional problem of finding a way to hold the current consumption of the analog buffers at a low level in order to reduce the power consumption of the overall device.

The present invention was designed to resolve the problems described above, and it is aimed at the realization of multiple driving methods which can invert the polarity of voltage applied to liquid crystal elements without unduly increasing the size of circuits in the liquid crystal driving device.

### Description of the Invention

In order to resolve the problems mentioned above, the liquid crystal driving device of this invention includes the features defined in Claim 1. Preferred embodiments are defined in the dependent claims.

A liquid crystal display panel driving method, according to the invention, is defined in Claim 26.

### Brief Explanation of the Figures

- Fig. 1: is an example of the configuration of a liquid crystal driver associated with Example 1 of this invention.
- Fig. 2: is an example of a specific configuration of the liquid crystal driver shown in Fig. 1,
- Fig. 3: is an example of a specific configuration of the liquid crystal driver shown in Fig. 1.
- Fig. 4: is a timing chart for 1V inversion driving in Example 1.
- Fig. 5: is used to explain the operation of the liquid crystal driver for 1V inversion driving.
- Fig. 6: is a timing chart for 1H inversion driving in Example 1.
- Fig. 7: is used to explain the operation of the liquid crystal driver for 1H inversion driving.
- Fig. 8: is used to explain the operation of the liquid crystal driver for 1H inversion driving.
- Fig. 9: is a timing chart for 1 S inversion driving in Example 1.
- Fig. 10: is used to explain the operation of the liquid crystal driver for 1S inversion driving.
- Fig. 11: is a timing chart for 1H + 1S inversion driving in Example 1.
- Fig. 12: is used to explain the operation of the liquid crystal driver for 1H + 1S inversion driving.
- Fig. 13: is used to explain the operation of the liquid crystal driver for 1H + 1S inversion driving.
- Fig. 14: is an example of the configuration of Example 2 of this invention.
- Fig. 15: is a timing chart for 1V inversion driving in Example 2.
- Fig. 16: is an example of the configuration of Example 3 of this invention.
- Fig. 17: is a timing chart for 1H inversion driving in Example 3.
- Fig. 18: is an example of the configuration of Example 4 of this invention.
- Fig. 19: is a timing chart for 1S inversion driving in Example 4.
- Fig. 20: is an example of the configuration of Example 5 of this invention.
- Fig. 21: is a timing chart for 1H + 1S inversion driving in Example 5.
- Fig. 22: is used to explain the operation of the liquid crystal driver for 1H + 1S inversion driving.
- Fig. 23: is used to explain the operation of the liquid crystal driver for 1H + 1S inversion driving.
- Fig. 24: is an example of the configuration of Example 6 of this invention.
- Fig. 25: is a timing chart for 1H inversion driving in Example 6.
- Fig. 26: is a timing chart for 1H + 1S inversion driving in Example 6.
- Fig. 27: is used to explain the configuration of other liquid crystal drivers.
- Fig. 28: is a timing chart for 1V inversion driving in a combined 1V/1S driver.
- Fig. 29: is a timing chart for 1V inversion driving in a combined 1V/1H/1H + 1S driver.
- Fig. 30: is an example of the configuration of a control circuit which controls a liquid crystal driver.
- Fig. 31: is an example of the overall configuration of a liquid crystal panel containing a liquid crystal driver.
- Fig. 32: is an example of the input-output characteristics of an analog buffer.
- Fig. 33A: and Fig. 33B are examples of the configuration of a p-type analog buffer and an n-type analog buffer, respectively.
- Fig. 34A: Fig. 34B, and Fig. 35C are used to explain the method for shifting supply voltage.
- Fig. 35A: and Fig. 35B are an example of the input-output characteristics of a p-type analog buffer and an n-type analog buffer when the supply voltage is shifted.
- Fig. 36: is used to explain the operation of an example in which 1S inversion driving is achieved using two liquid crystal drivers.
- Fig. 37: is used to explain the operation of an example in which 1H + 1S inversion driving is achieved using two liquid crystal drivers.
- Fig. 38: is an example of the configuration of an analog line sequential driver of the prior art.
- Fig. 39: shows the configuration of the pixel region of a liquid crystal panel.
- Fig. 40A: Fig. 40B, Fig. 40C, and Fig. 40D are used to explain 1V, 1H, 1S, and 1H + 1S inversion driving.

### The Best Systems for Implementing the Invention

Using the accompanying figures, specific embodiments of the present invention will be described in detail below.

### Embodiment 1

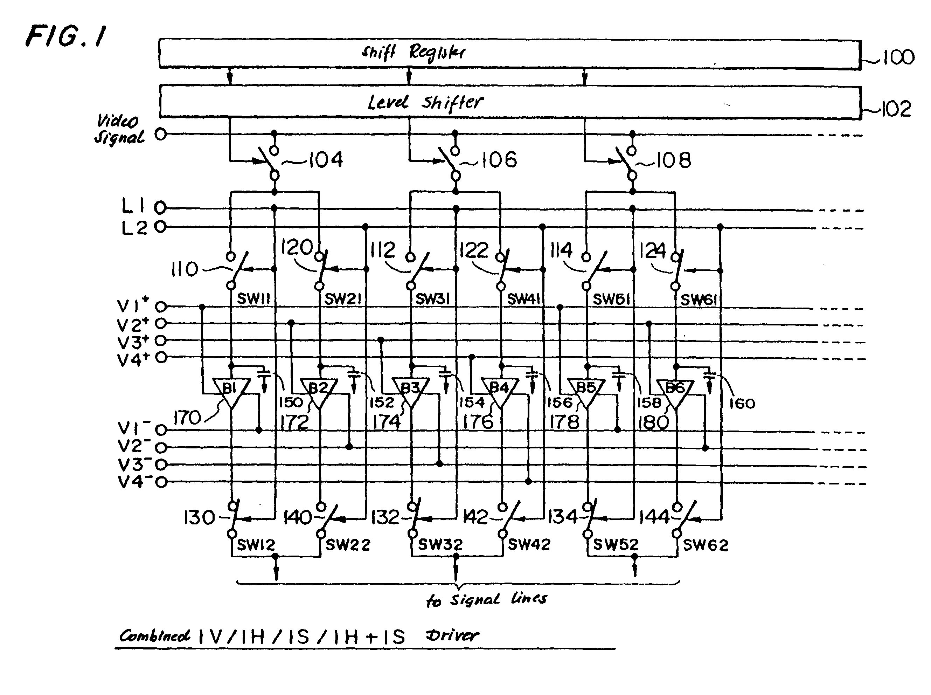

Figure 1 shows an embodiment of the configuration of a liquid crystal driver (liquid crystal driving device) according to the first embodiment of this invention. The first embodiment concerns a combined 1V/1H/1S/1H + 1 S liquid crystal driver. This liquid crystal driver is a source driver which drives the signal lines and includes multiple (1 to N) signal driving means. For example, the first signal driving means includes switches (analog switches) 104, 110, 120, 130, 140; capacitors 150 and 152; and analog buffers 170 and 172. The second signal driving means includes switches 106, 112, 122, 132, 142; capacitors 154 and 156; and analog buffers 174 and 176. Additionally, the number of signal lines in Figure 1 driven by the liquid crystal driver is, for the display of color on a 640 x 480 dot liquid crystal panel, for example, 640 x 3. In this case, it is possible to provide multiple liquid crystal driver devices to drive these signal lines, or it is also possible to locate liquid crystal driver devices on the top and bottom edges of the liquid crystal panel and alternately connect the signal line columns to the top and bottom drivers. Also, when displaying color, it is possible either to provide three video signal lines for RGB use and connect these three video signal lines individually to sampling switches, or to use time-division of the RGB video signals on one video line.

Shift register 100 shifts in synchronization with the shift clock, and the output is fed into level shifter 102 for level shifting. Switches 104 to 108 are turned off sequentially (opened) based on the output of level shifter 102, and sampling of the video signal is accomplished. The sampled voltage is held in capacitors 150 to 160 after passing through the switches that are on among switches 110 to 114 and 120 to 124. In this way, switches 104 to 108 and capacitors 150 to 160 in the present example provide means to sequentially sample and hold the video signal.

Analog buffers 170 to 180, in the form of an operational amplifier connected to a voltage follower for example, have the function of buffering and outputting the sampled and held voltages from capacitors 150 to 160. For example, analog buffers 170, 174, and 178 (the first analog buffer) buffer and output the voltages transmitted by switches 110 to 114 (the first switching means) while analog buffers 172, 176, and 180 (the second analog buffer) buffer and output the voltages transmitted by switches 120 to 124 (the second switching means).

In order to select the outputs of analog buffers 170 to 180, switches 130 to 134 (the third switching means) and switches 140 to 144 (the fourth switching means) which compose the selection means are connected to the outputs of analog buffers 170 to 180. Then, the outputs of analog buffers 170 to 180 are transmitted to the signal lines through the switches that are on among switches 130 to 134 and 140 to 144.

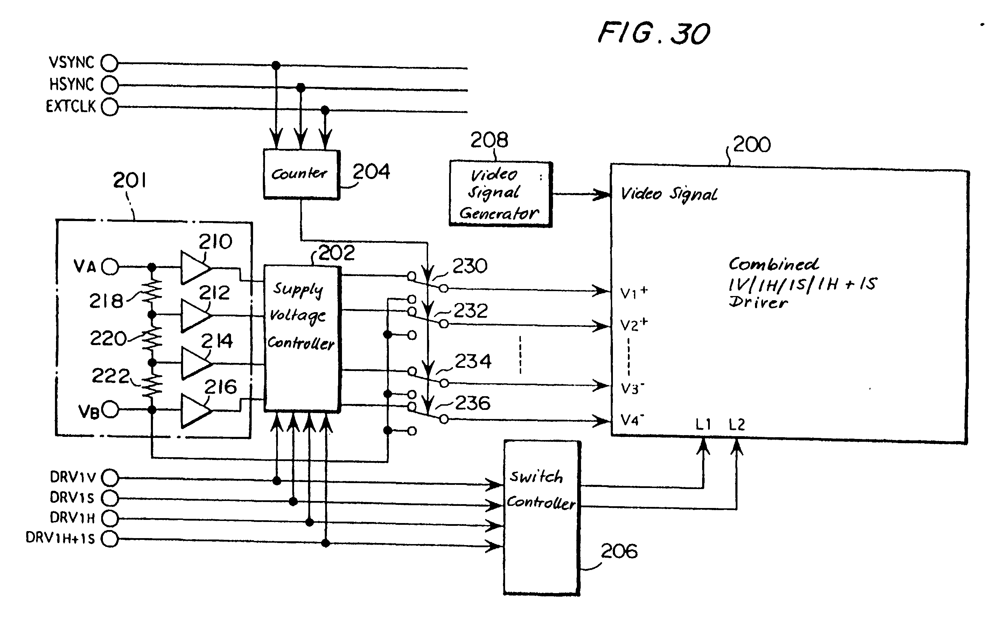

Now, in this embodiment, the high potential and low potential supply voltage to analog buffers 170 to 180 is controlled; and, using the counter voltage as a reference, shift control is achieved by shifting the range of the output voltage of analog buffers 170 to 180 to either high potential or low potential. This shift control is achieved by controlling, by means of voltage supply controller 202 (see Figure 30), the high and low voltages applied to supply lines V1⁺ to V4⁺ and V1⁻ to V4⁻, respectively, which are connected to analog buffers 170 to 180.

Further, in this embodiment, selection control of the output of the analog buffers, the output voltage range of which has been shifted, is carried out through selection by switches 130 to 134 and 140 to 144 (selection means). This selection control is achieved by controlling, by means of switch controller 206 (see Figure 30), the voltages supplied to switch control lines L1 and L2.

Next, control of switches 110 to 144 will be explained in detail. In this embodiment, the on-off operation of the first switch 110 (SW11) and the fourth switch 140 (SW22) are coupled as are the on-off operation of the second switch 120 (SW21) and the third switch 130 (SW12). The control of the on-off operation of these switches is achieved through the switch controller 206 (see Figure 30) connected to the first and second switch control lines L1 and L2. For example, in Figure 1, when the second switch 120 is on (closed), the third switch 130 is also on. Consequently, at this time, the video signal voltage sampled by switch 104 is held by capacitor 152 after passing through switch 120. Also, the voltage held in capacitor 150 during the previous period is buffered by analog buffer 170 and then output to the signal line by way of the third switch 130. On the other hand, in the reverse case of that described above, when the second switch 120 is off, the third switch 130 is also off; and, at this time, the first and fourth switches 110 and 140, respectively, are on.

In the example of the prior art shown in Figure 38, capacitors 2028 to 2034 could be charged with sampling voltages only during the period when the output enable signal was in effect and switches 2012 to 2018 were on. Additionally, it was necessary to have separate capacitors for sampling, 2020 to 2026, and holding, 2028 to 2034. In contrast, in the present example, as explained above, by turning the switches on and off alternately, the capacitors can charge using an entire horizontal scanning period thereby allowing the output of a precise display signal voltage. Additionally, it is possible to use the same capacitors for both sampling and holding.

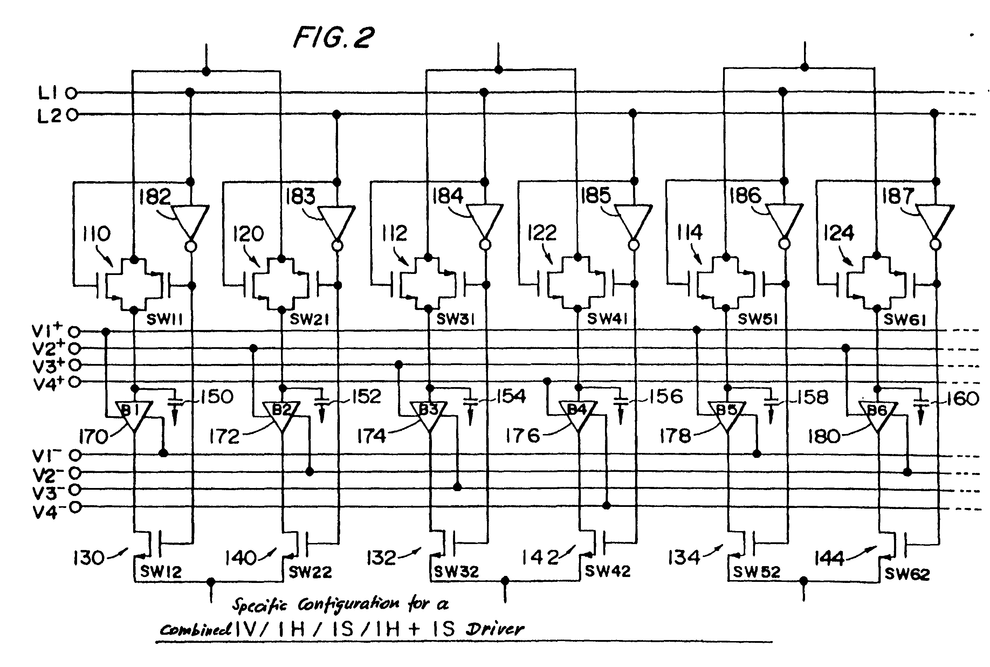

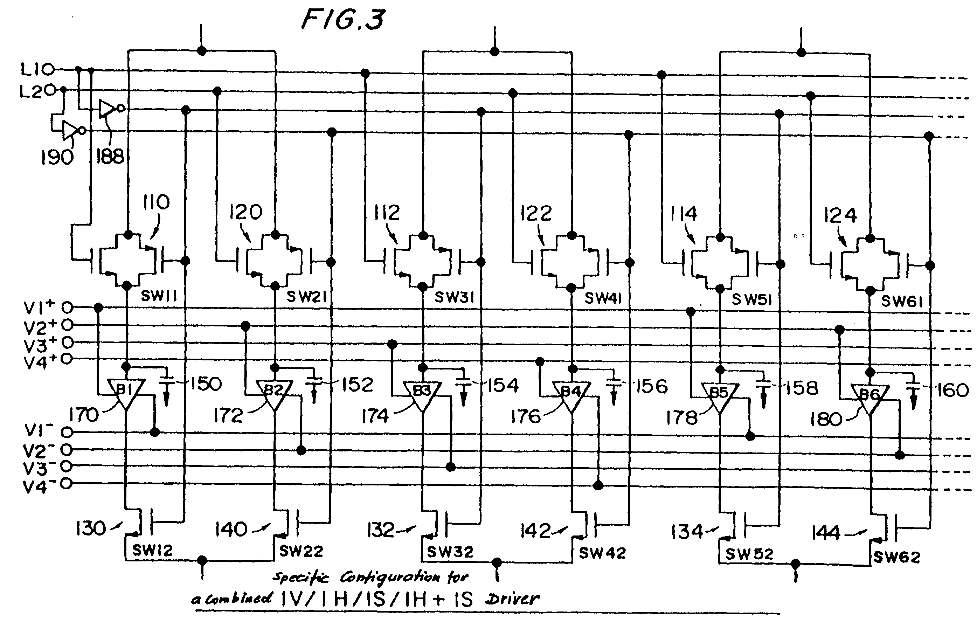

Figures 2 and 3 show embodiment of specific configurations of the liquid crystal driver shown in Figure 1. In Figures 2 and 3, however, shift register 100, level shifter 102, and switches 104 to 108 shown in Figure 1 are omitted. As shown in Figures 2 and 3, switches 110 to 124 are composed of transmission-type transistors while switches 130 to 144 are composed of n-type transistors. Through the establishment of inverter circuits 182 to 187 in Figure 2 and the establishment of inverter circuits 188 and 190 in Figure 3, the configuration of the drivers guarantees that the first switch 110 and the third switch 130 (or the second switch 120 and the fourth switch 140) cannot be on simultaneously. The construction of Figure 2 is advantageous in that the number of wiring connections to switch control lines L1 and L2 can be decreased, and the construction of Figure 3 is advantageous in that the number of inverter circuits can be decreased.

Next, the control of the supply voltage to the analog buffers will be explained in detail. As shown in Figure 1, in the present embodiment, a four-channel supply voltage can be supplied through four channels using supply lines V1⁺ to V4⁺ for high potentials and supply lines V1⁻ to V4- for low potentials. In other words, voltages are supplied to the first analog buffers 170 and 178 included in the odd-numbered signal driving means (the first and third signal driving means) through the first supply lines V1⁺ and V1⁻; voltages are supplied to the second analog buffers 172 and 180 included in the odd-numbered signal line driving means (the second signal driving means) through the second supply lines V2⁺ and V2⁻; voltages are supplied to the first analog buffer 174 included in the even-numbered signal driving means through the third supply lines V3⁺ and V3⁻; and voltages are supplied to the second analog buffer 176 included in the even-numbered signal driving means through the fourth supply lines V4⁺ and V4⁻. The supply voltages corresponding to these supply lines are controlled by means of the supply voltage controller 202 (see Figure 30) connected to the supply lines. By such control of the supply voltages, analog buffers 170 to 180 can switch from use as positive polarity analog buffers to use as negative polarity analog buffers. Here, positive polarity analog buffers are buffers in which the output voltage range has been shifted to high potential using the counter voltage (common voltage) as a reference; and negative polarity analog buffers are buffers in which the output voltage range has been shifted to low potential using the counter voltage as a reference. As mentioned previously, the liquid crystal elements degrade under direct current driving so that it is necessary to invert the polarity of the voltage applied to the liquid crystal elements at regular intervals. In the present embodiment, this polarity inversion is realized by controlling the values of the supply voltages to the analog buffers through supply lines V1 ⁺ to V4⁺ and V1⁻ to V4- and switching between positive polarity analog buffers and negative polarity analog buffers. In this embodiment, it is possible to realize 1V, 1H, 1S, and 1H + 1S inversion driving from a single liquid crystal driver using control of supply voltages to supply lines V1⁺ to V4⁺ and V1⁻ to V4⁻ and the control of switch control lines L1 and L2 described above. How 1V, 1H, 1S, and 1H + 1S inversion driving can be realized using liquid crystal drivers having the configuration shown in Figure 1 will be explained below.

### (1) 1V Inversion (Frame Inversion) Driving

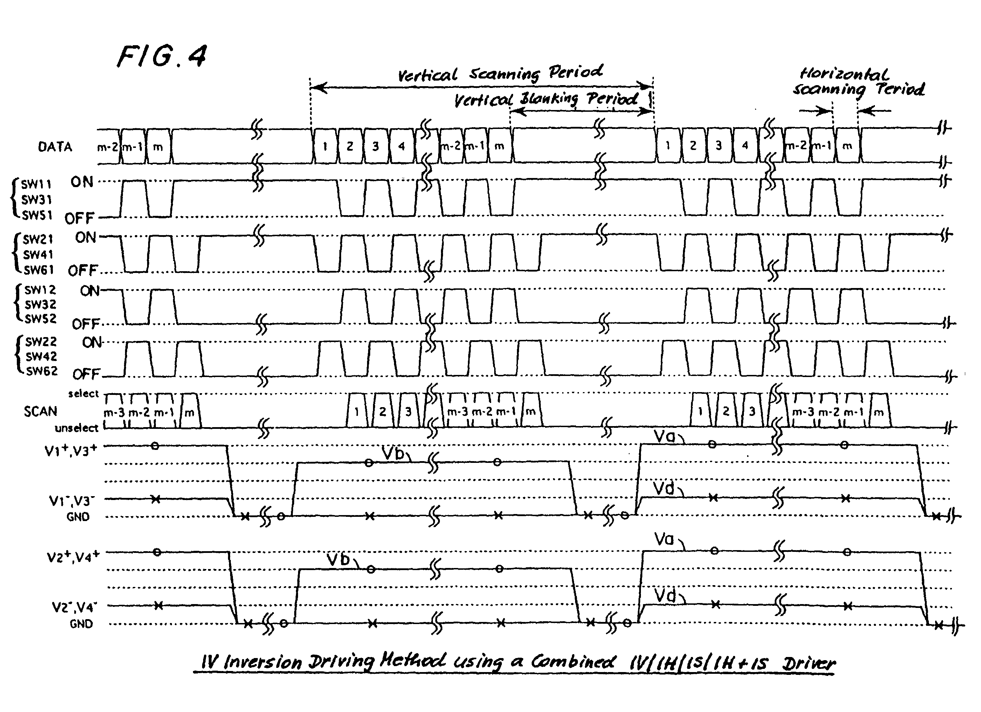

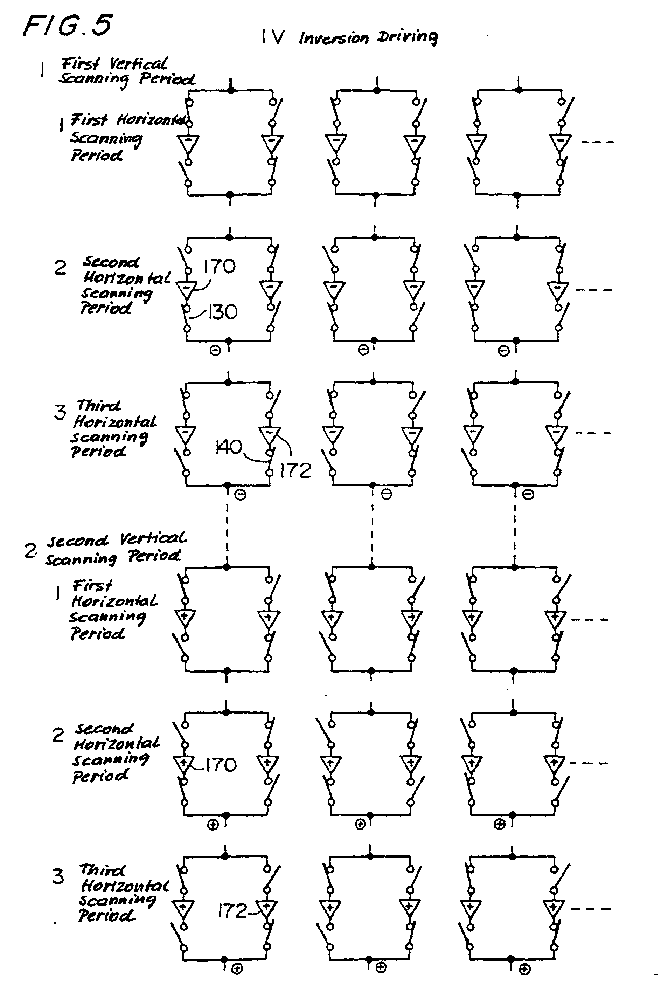

1V inversion driving is a driving method as shown in Figure 40 A discussed previously. Using this driving method, it is possible to suppress the generation of line nonuniformity. Figure 4 is a timing chart for achieving 1V inversion driving with the liquid crystal driver of Figure 1, and Figure 5 explains the liquid crystal driver operation in such a case. In Figure 4, on and off conditions are shown for switches such as SW11 and SW31; but, for the circuit configurations in Figures 2 and 3, the on and off conditions shown in Figure 4 correspond to high level and low level, respectively.

First, as shown in Figure 4, during the vertical blanking period, switches SW11, SW31, and SW51 as well as SW21, SW41, and SW61 are all on while switches SW12, SW32, and SW52 as well as SW22, SW42, and SW62 are all off. Accordingly, the display signal voltage is not supplied to the signal lines.

Additionally, during the vertical blanking period, supply lines V1⁺ to V4⁺ and V1⁻ to V4⁻ are all fixed at ground potential (GND). As a result, the high potential supply VDD and the low potential supply VSS of analog buffers 170 to 180 are fixed at ground potential. Analog buffers 170 to 180 have integrated constant current supplies; and, when there is a potential difference between VDD and VSS, current flows via this constant current supply. As in the present embodiment, however, the potential difference between VDD and VSS vanishes if VDD and VSS are fixed at ground potential; and, since no current flows via the constant current supply, it is possible to decrease power consumption. During the vertical blanking period, even if the analog buffers are not in operation, switches 130 to 144 are off so that there is no effect on the liquid crystal panel screen display. Meanwhile, since the analog buffers are arranged to correspond to each signal line, if the power consumption of analog buffers 170 to 180 is decreased, the power consumption of the entire liquid crystal panel can be decreased substantially. As a result, in the reverse case under normal operating conditions, it is possible to increase the amount of current flowing through the constant current supplies in analog buffers 170 to 180 with the result being that the performance of the analog buffers can be improved and improvements in the liquid crystal panel display quality are also possible. Further, in this case, the power supply which fixes VDD and VSS at ground potential can also be used when analog buffers 170 to 180 are in normal operating condition. Therefore, this example also has the advantage that it is not necessary to generate a new supply voltage to set VDD and VSS to fixed values. Further, in this example, the reason this type of treatment can be easily realized is that it is possible to use supply voltage controller 202 which is already present for polarity inversion in analog buffers 170 to 180. The choice of fixed potentials for VDD and VSS is not limited to ground potential, and it is possible to use various other potentials.

Next, entering the vertical scanning period, during the first horizontal scanning period, switches SW11, SW31, and SW51 as well as SW22, SW42, and SW62 are on while switches SW21, SW41, and SW61 as well as SW12, SW32, and SW52 are off. Under these conditions, switches 104, 106, and 108 sequentially turn off during one horizontal scanning period. Thus, video signal voltages sequentially sampled through switches 104, 106, and 108 are sequentially held by capacitors 150, 154, and 158 by passing through "on" switches SW11, SW31, and SW51.

At this point, since switches SW12, SW32, and SW52 are off, the transient state sample and hold voltages are not output to the signal lines through analog buffers 170, 174, and 178. Further, although switches SW22, SW42, and SW62 are on, for this case in the present example, because the scan lines (SCAN in Figure 4) are unselected during the first horizontal scanning period as shown in Figure 4, an erroneous display does not appear on the liquid crystal panel. In other words, in the present example, after the sample and hold during the first horizontal scanning period of the vertical scanning period is finished, when the third switches 130 to 134 or the fourth switches 140 to 144 become conducting, the select voltage (voltage to select whether or not the applied voltage is supplied to the liquid crystal element) is effective after a sequential delay of one horizontal scanning period. As a result, the circuit configuration as shown in Figure 1 is able to prevent an erroneous display even when sample and holding is active.

The control of the select voltage output corresponding to the scan lines is performed by the scan line drivers (gate drivers, scan driving means) not shown in the figure.

In the present example, prior to entering the vertical scanning period, the supply lines V1⁺ and V3⁺ as well as V2⁺ and V4⁺ are set to a level of Vb while V1⁻ and V3⁻ as well as V2⁻ and V4⁻ are set to ground level. As a result, all of analog buffers 170 to 180 are negative polarity analog buffers. In other words, it is possible to establish the analog buffers such that the output voltage range is shifted to lower potentials using the counter voltage (common voltage) as a reference.

Next, entering the second horizontal scanning period, this time switches SW11, SW31, and SW51 as well as SW22, SW42, and SW62 are off while switches SW21, SW41, and SW61 as well as SW12, SW32, and SW52 are on. Under these conditions, switches 104, 106, and 108 sequentially turn off during one horizontal scanning period; and the sampled video signal voltages are sequentially held by capacitors 152, 156, and 160.

At this time, since switches SW1 2, SW32, and SW52 are on, the voltages held in capacitors 150, 154, and 158 during the first horizontal scanning period are output to the signal lines through analog buffers 170, 174, and 178. In this case, as shown in Figure 4, because the first scan line is effective (select), normal display operation is achieved in the first scan line. Also, because switches SW22, SW42, and SW62 are off at this time, the transient state hold voltages are not output to the signal lines.

The switching action of the switches as described above is repeated until all the scan lines are scanned; and once the last scan line is scanned, the vertical blanking period is again entered and all of V1⁺ to V4⁺ and V1⁻ to V4⁻ are set to ground potential. Following this, prior to entering the next vertical scanning period, supply lines V1⁺ and V3⁺ as well as V2⁺ and V4⁺ are set to a level of Va while V1⁻ and V3⁻ as well as V2⁻ and V4⁻ are set to a level of Vd. As a result, all of analog buffers 170 to 180 are positive polarity analog buffers. In other words, it is possible to establish the analog buffers such that the output voltage range is shifted to higher potentials using the counter voltage (common voltage) as a reference. Thus, the analog buffers which were set to negative polarity during the previous vertical scan period are set to positive polarity and 1 V inversion driving is achieved.

Here, the relations between Va, Vb, and Vc are, for example, Va - Vd = Vb - GND, Va > Vb, Vd > GND.

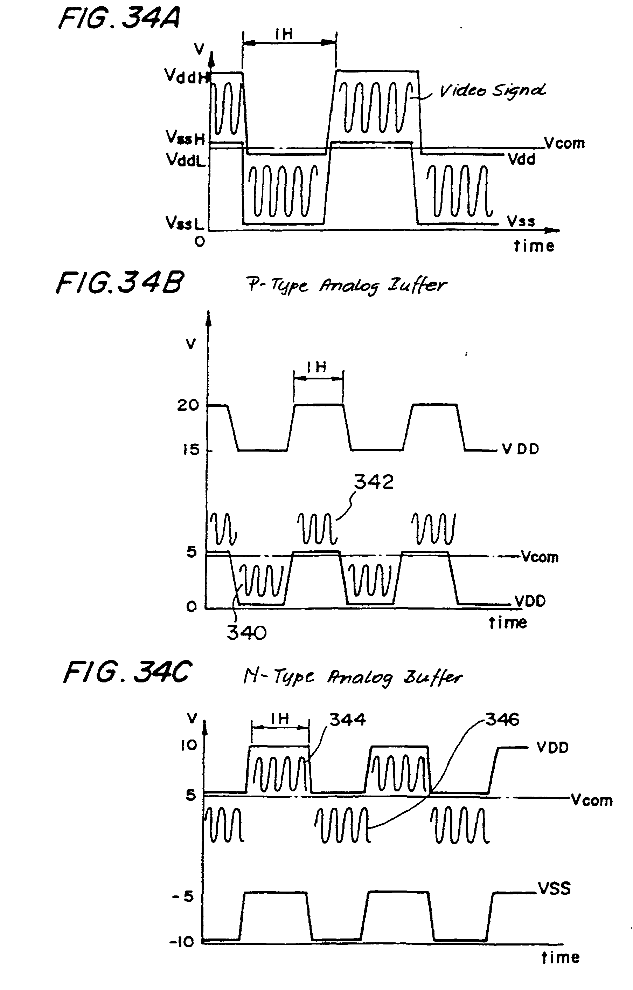

Additionally, if the analog buffers are p-type, the common voltage Vcom can be set in the neighborhood of Vd for example (see Figure 34B). In this case, Va, Vb, and Vd, are, for example, 20 V, 15 V, and 5 V. On the other hand, if the analog buffers are n-type, the common voltage Vcom can be set in the neighborhood of Vb for example (see Figure 34C). Of course, the supply voltage shift, as shown in Figure 34A is also possible, as long as the supply voltage is controlled such that at the least the output voltage range of the analog buffers is shifted to higher potentials or lower potentials using the counter voltage as a reference.

A schematic representation of the operation of 1V inversion driving for the present example is shown in Figure 5. The following occurs during the first vertical scanning period. First, the voltage held during the first horizontal scanning period is buffered in analog buffer 170 and output via switch 130 during the second horizontal scanning period. Here, because analog buffer 170 is negative polarity as a result of supply voltage control, the output voltage range of analog buffer 170 is also negative; and negative voltage with respect to the counter voltage reference level is applied to the liquid crystal element. Next, the voltage sampled and held during the second horizontal scanning period is buffered by negative polarity analog buffer 172 and output through switch 140 during the third horizontal scanning period. This negative voltage is applied to the liquid crystal element.

Upon entering the second vertical scanning period, analog buffers 170 to 180 are all positive polarity as a result of supply voltage control. Consequently, hold voltages are buffered and output by means of positive polarity analog buffer 170 during the second horizontal scanning period and positive polarity analog buffer 172 during the third horizontal scanning period. As a result of the above process, 1V inversion (frame inversion) driving can be achieved. In Figure 5, although an effective display signal voltage is output for the first time during the second horizontal scanning period, even in such a case, as mentioned previously, the scan lines are effective after a single horizontal scanning period delay and no ill effects result.

### (2) 1H Inversion (Scan Line Inversion) Driving

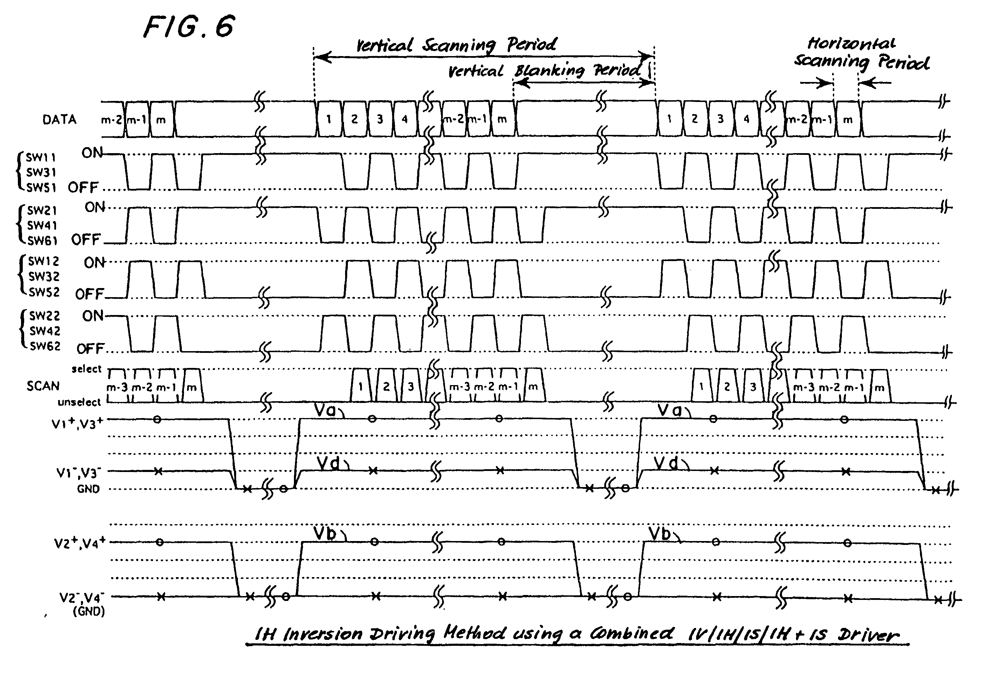

1 H inversion driving is a driving method as shown in Figure 40 B discussed previously. Using this driving method, liquid crystal panel flicker and cross-talk in the vertical direction can be prevented. Additionally, the appearance of vertical stripes during the display of moving images can also be prevented. In particular, this method is effective when employing non-linear active elements (such as polycrystalline TFTs and MIMs for example) with large off leakage currents. Flicker can be suppressed to a lower level using this driving method in comparison to 1S inversion driving. Figure 6 shows the timing chart for achieving 1H inversion driving with the liquid crystal driver of Figure 1. The differences between 1V inversion driving of Figure 4 and 1H inversion driving of Figure 6 are as described below. First, in contrast to the fixed on-off sequence of switches in Figure 4, the on-off sequence of switches in Figure 6 differs with each vertical scanning period. In other words, in Figure 6, during the first vertical scanning period, switches SW11, SW31, and SW51 as well as SW22, SW42, and SW62 are initially on, then switches SW21, SW41, and SW61 as well as SW12, SW32, and SW52 turn on. During the second vertical scanning period, however, switches SW21, SW41, and SW61 as well as SW12, SW32, and SW52 are initially on, then switches SW11, SW31, and SW51 as well as SW22, SW42, and SW62 turn on. The on-off sequence of switches alternates in this fashion after each vertical scanning period.

Additionally, the control of supply voltages to analog buffers 170 to 180 differs as described below. In Figure 4, supply voltages to supply lines V1⁺ to V4⁺ and V1⁻ to V4⁻ switch after every vertical scanning period from Vb level and ground level to Va level and Vd level. In contrast, in Figure 6, V1⁺ and V3⁺ are fixed at Va level, V1⁻ and V3⁻ are fixed at Vd level, V2⁺ and V4⁺ are fixed at Vb level, and V2⁻ and V4⁻ are fixed at ground level. Consequently, analog buffers 170, 174, and 178 are fixed at positive polarity while analog buffers 172, 176, and 180 are fixed at negative polarity.

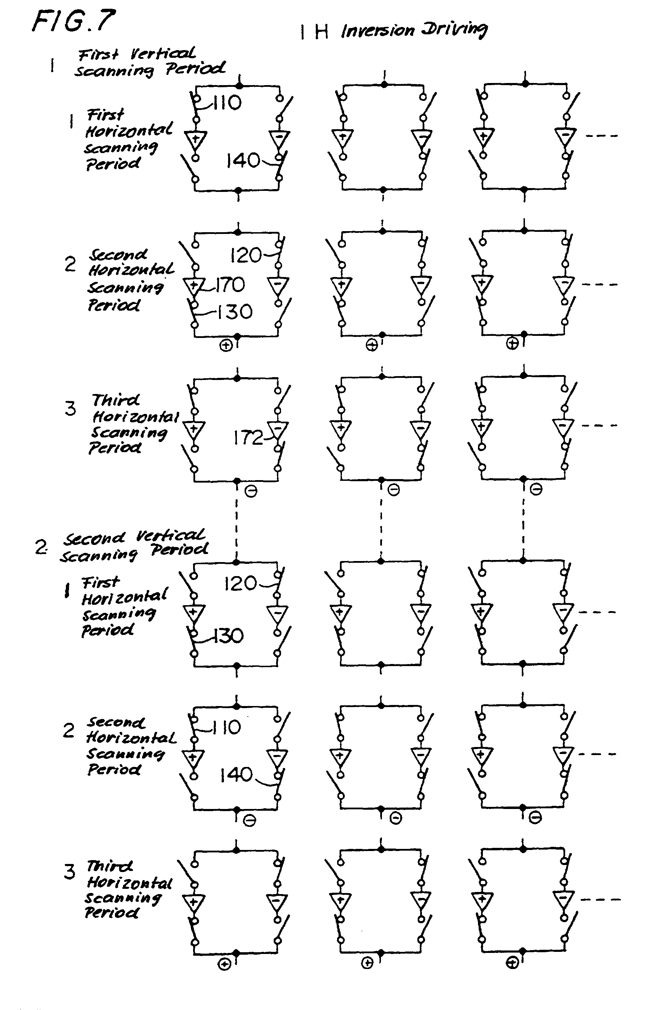

The operation described above is shown schematically in Figure 7. As Figure 7 shows, one of the analog buffers which forms half the pair which outputs a display signal to a single signal line is of positive polarity while the other analog buffer is of negative polarity. That is, analog buffer 170 is positive and analog buffer 172 is negative. During the second horizontal scanning period, the voltage applied to the liquid crystal is positive since the buffering is accomplished by positive polarity analog buffer 170; and, during the third horizontal scanning period, the voltage applied to the liquid crystal is negative since the buffering is accomplished by negative polarity analog buffer 172. As a result, the voltage applied to the liquid crystal changes between positive and negative polarity after each scan line.

Further, during the first vertical scanning period, the sequence of switching is such that initially switches 110 and 140 are on, then switches 120 and 130 turn on. In contrast, during the second vertical scanning period, the sequence of switching is such that initially switches 120 and 130 are on, then switches 110 and 140 turn on. Thus, the polarity of the liquid crystal applied voltage inverts between the first vertical scanning period and the second vertical scanning period.

In the manner above, 1H inversion driving can be achieved.

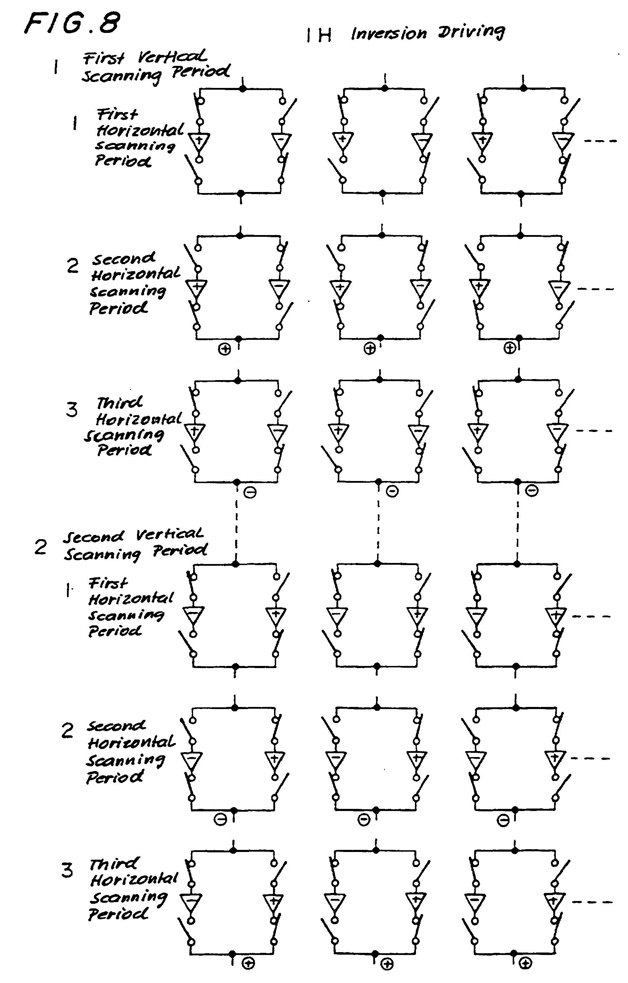

In order to invert the polarity of the voltage applied to the liquid crystal after every vertical scanning period, not only the method of alternating the on-off sequence of switches after each vertical scanning period as shown in Figure 7, but also the method of changing the polarity of all the analog buffers 170 to 180 after each vertical scanning period as shown in Figure 8 is possible. 1 H inversion driving can be achieved through this second method as well.

### (3) 1S Inversion (Signal Line Inversion) Driving

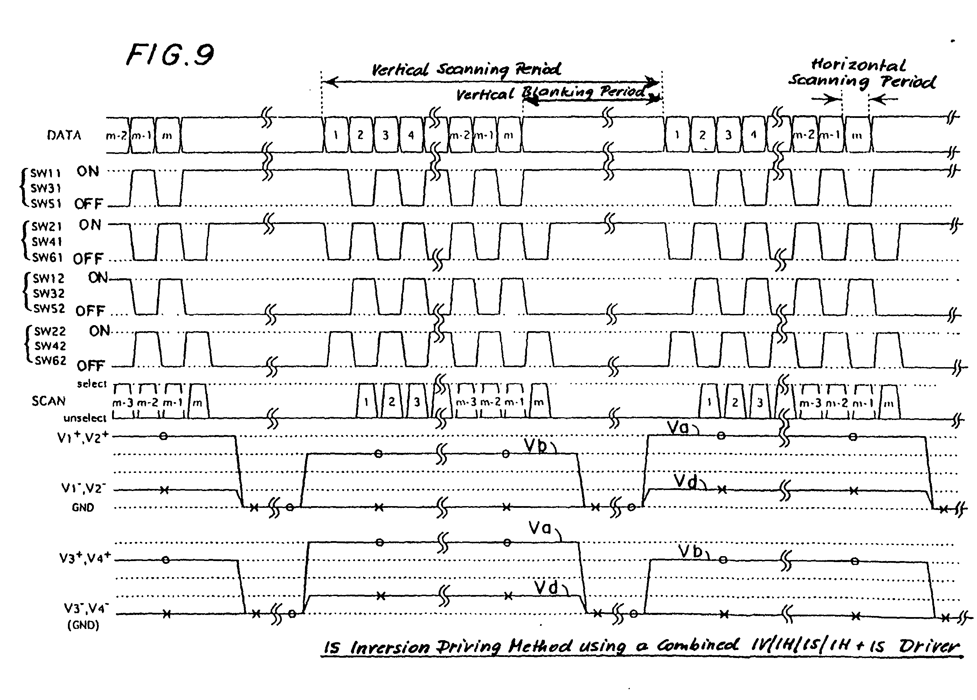

1S inversion driving is a driving method as shown in Figure 40 C discussed previously. Using this driving method, liquid crystal panel flicker and cross-talk in the horizontal direction can be prevented. Additionally, the appearance of horizontal stripes during the display of moving images can also be prevented. This method is particularly effective for remedying the brightness gradient problem caused by parasitic resistance of the interconnect electrodes, and is an appropriate driving method for large liquid crystal panels. Figure 9 shows the timing chart for achieving 1S inversion driving with the liquid crystal driver of Figure 1. The differences between 1V inversion driving of Figure 4 and 1S inversion driving of Figure 9 are as described below. Namely, the switch on-off sequence is the same in Figures 4 and 9, but the control of supply voltages to the analog buffers is different. In Figure 4, the supply voltages switch after each vertical scanning period, but the same supply voltage is provided to all analog buffers within a single vertical scanning period. In contrast, in Figure 9, the voltage supplies for V1⁺ and V2⁺ are both at level Vb, and the voltage supplies for V1⁻ and V2⁻ are both at ground level. Further, the voltage supplies of V3⁺ and V4⁺ are both at level Va, and the voltage supplies for V3-and V4⁻ are both at level Vd. Accordingly, analog buffers 170, 172, 178, and 180 become negative, and analog buffers 174 and 176 become positive. In other words, when considering the analog buffers in pairs which output display signals to a single signal line, both analog buffers have the same polarity, but the analog buffers of the adjacent pair are both of opposite polarity to that of the first pair. As a result, it is possible to invert the polarity of the analog buffers after every signal line. Further, as shown in Figure 9, since the supply voltages shift after each vertical scanning period, the polarity of all the analog buffers is inverted after each vertical scanning period.

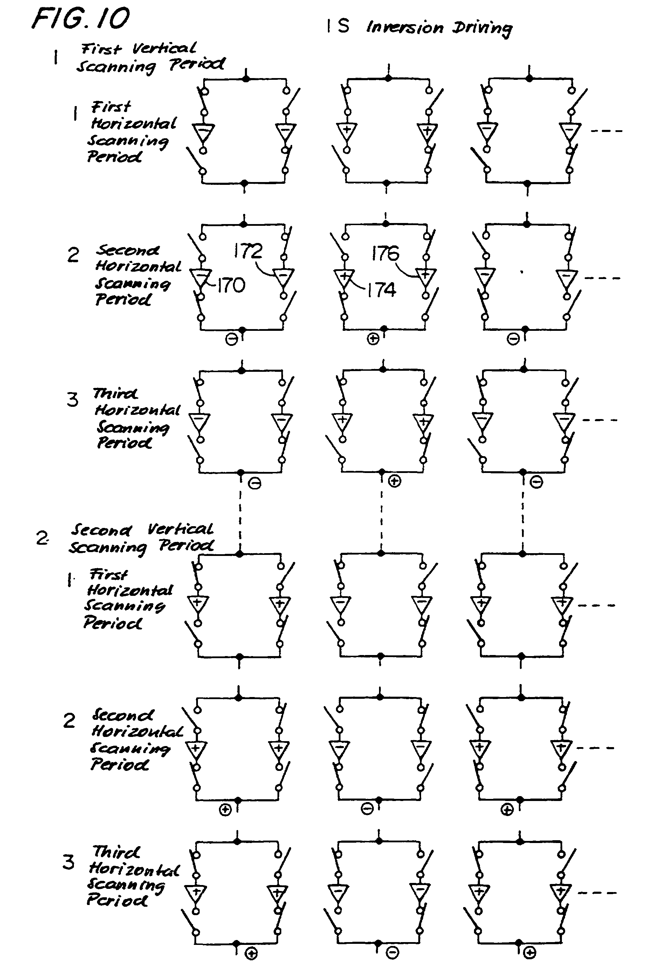

The operation described above is shown schematically in Figure 10. As Figure 10 shows, the pair composed of analog buffers 170 and 172 is negative; and the adjacent pair composed of analog buffers 174 and 176 is positive. Consequently, the polarity of the voltage applied to the liquid crystal is reversed after every signal line. Also, the polarity of the analog buffers is reversed between the first vertical scanning period and the second vertical scanning period. In the manner above, 1S inversion driving can be achieved.

### (4) 1H + 1S inversion (Dot Inversion) Driving

1H + 1S inversion driving is a driving method as shown in Figure 40 D discussed previously. Using this driving method, liquid crystal panel flicker and cross-talk in the horizontal and vertical directions can be prevented. Additionally, the brightness gradient problem caused by parasitic resistance of the interconnect electrodes can be solved; and, since there is little current exchange with external circuits, it is possible to decrease the power consumed by the counter voltage generating circuit.

Previously, in order to achieve 1H + 1S inversion driving, complicated circuits and complicated control was necessary; but, in the present invention, it can be realized by a simple circuit such as that shown in Figure 1.

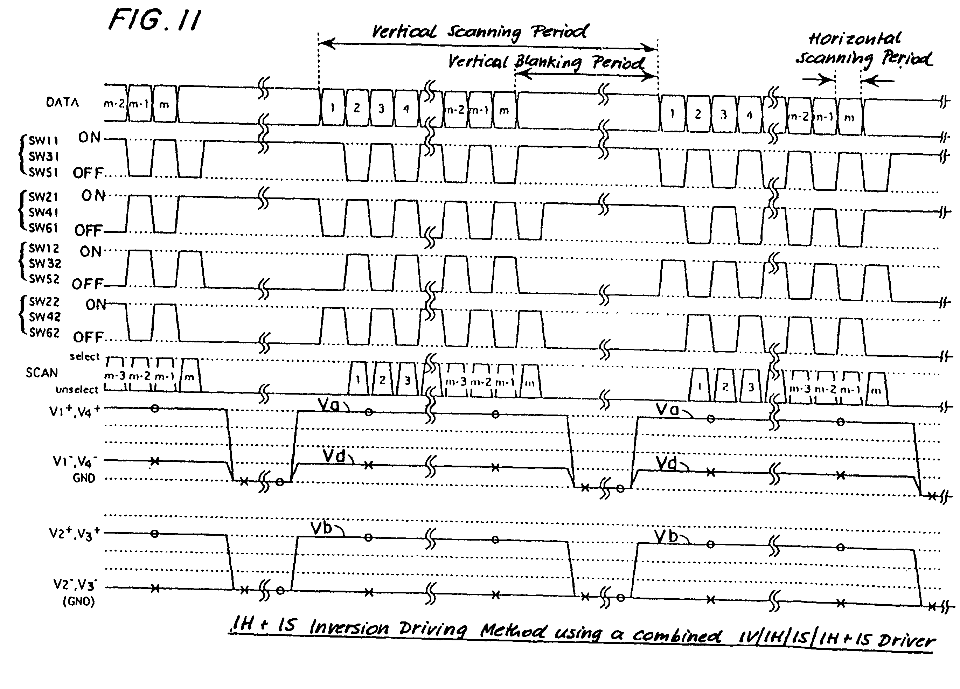

Figure 11 shows the timing chart for achieving 1H + 1S inversion driving with the liquid crystal driver of Figure 1. The differences between 1V inversion driving of Figure 4 and 1H + 1S inversion driving of Figure 11 are as described below. First, in Figure 11, the switch on-off sequence changes after each vertical scanning period. For example, in Figure 11, in contrast to the first vertical scanning period in which switches SW11, SW31, and SW51 are initially on, switches SW11, SW31, and SW51 are initially off during the second vertical scanning period.

Additionally, the control of supply voltages is also different. In contrast to the case for Figure 1 in which the supply voltages switch after every vertical scanning period, in Figure 11, V1⁺ and V4⁺ are fixed at level Va; V1⁻ and V4⁻ are fixed at level Vd; V2⁺ and V3⁺ are fixed at level Vb; and V2⁻ and V3⁻ are fixed at ground level. As a result, analog buffers 170, 176, and 178 are fixed at positive polarity while analog buffers 172, 174, and 180 are fixed at negative polarity.

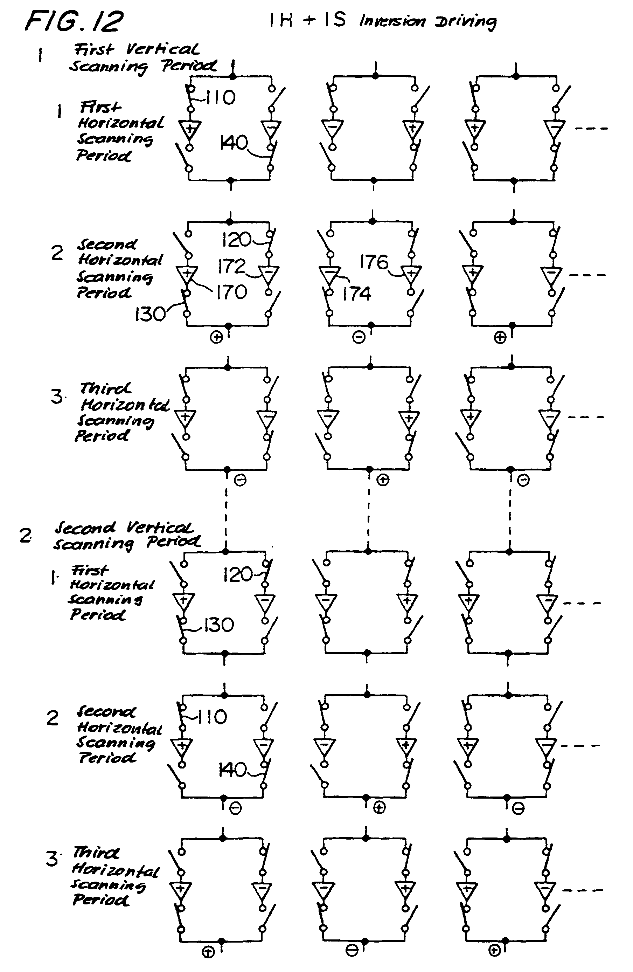

The operation described above is shown schematically in Figure 12. As Figure 12 shows, analog buffer 170, which forms half the pair which outputs a display signal to a single signal line, is of positive polarity while the other analog buffer 172 is of negative polarity. The positive and negative polarities are exchanged every signal line. For the next signal line, analog buffer 174 is negative, and analog buffer 176 is positive.

Also, during the first vertical scanning period, the sequence is such that switches 110 and 140 are initially on, and then switches 120 and 130 turn on. In contrast, during the second vertical scanning period, the sequence is such that switches 120 and 130 are initially on, and then switches 110 and 140 turn on. In this fashion, the polarity of the voltage applied to the liquid crystal is reversed from the first vertical scanning period to the second vertical scanning period.

In the manner above, 1H + 1S inversion driving can be achieved.

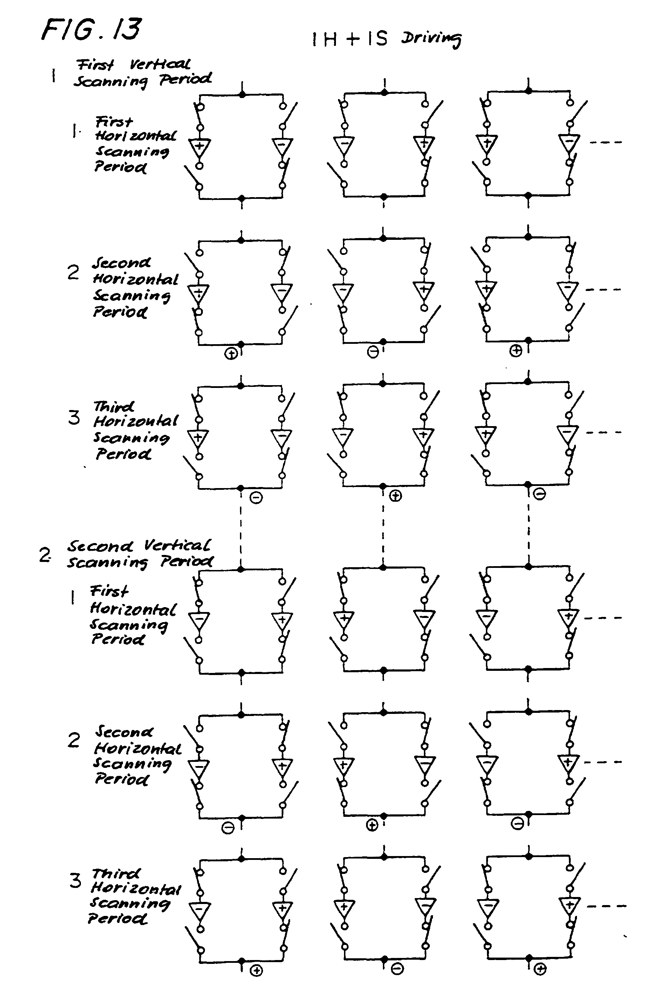

In order to invert the polarity of the voltage applied to the liquid crystal after each vertical scanning period, not only the method of alternating the on-off sequence of switches after each vertical scanning period as shown in Figure 12, but also the method of changing the polarity of all the analog buffers 170 to 180 after each vertical scanning period as shown in Figure 13 is possible. 1H + 1S inversion driving can be achieved through this second method as well.

As described above, by means of the present invention, it is possible to achieve all four types of driving methods with the single circuit configuration shown in Figure 1. As a result, it is possible to easily cope with design changes; and it is possible to realize a highly conventional optimum liquid crystal driver as a standard device in which the scale of the circuits is not excessively large.

### Embodiment 2

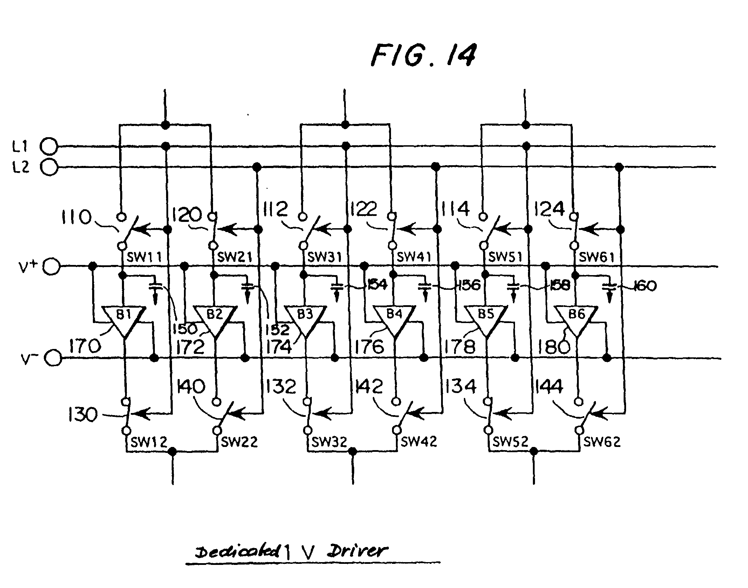

The configuration of a second embodiment of this invention is shown in Figure 14. The second embodiment relates to a liquid crystal driver for dedicated 1V driving. In this embodiment and those which follow, the shift register, level shifter, and sampling switches are omitted from the explanations. As in the first embodiment, there are two switch control lines in the second embodiment. Switching control is achieved through switch control line L1 for the first and third switches including 110, 130, 112, 132, 114, and 134 while switching control is achieved through switch control line L2 for the second and fourth switches including 120, 140, 122, 142, 124, and 144. Although there was a four-channel supply in the first embodiment, in this second embodiment there are only V⁺ and V⁻ supply lines forming a single channel system. In other words, all analog buffers 170 to 180 are connected to common supply lines; and the supply voltages applied to the common supply lines are controlled by supply voltage controller 202 (see Figure 30).

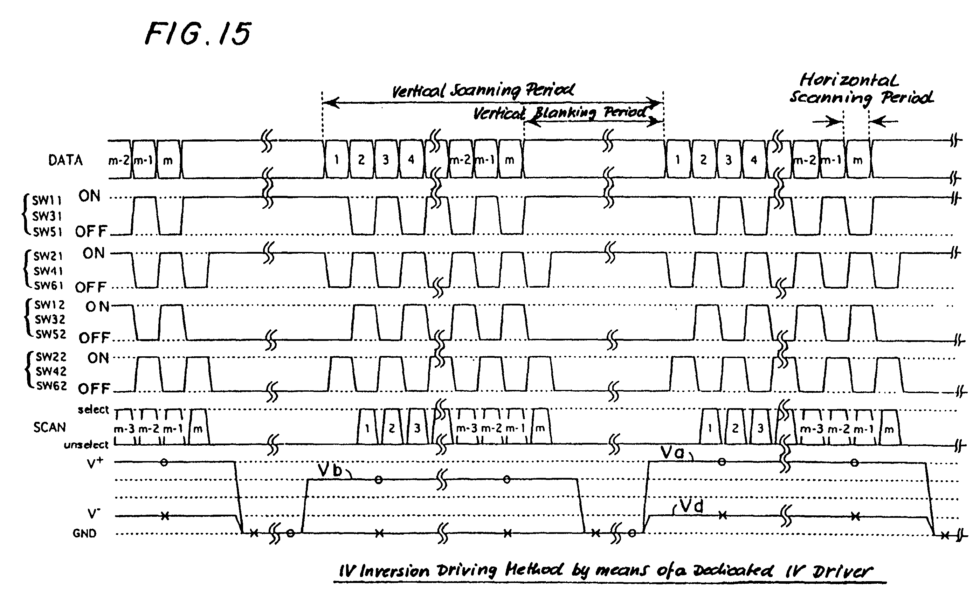

Figure 15 shows the timing chart for achieving 1V inversion driving with the liquid crystal driver of Figure 14. The second embodiment operates similarly to the operations explained in Figures 4 and 5. That is, 1V inversion driving can be achieved in the second embodiment if the supply voltage simply changes after each vertical scanning period such that the polarity of analog buffers 170 to 180 reverses after each vertical scanning period.

Although, in contrast to the first embodiment, only 1V inversion driving is possible in the second example, the number of supply lines can be decreased; the supply voltage control is simple; and the scale of the circuit can be decreased.

### Embodiment 3

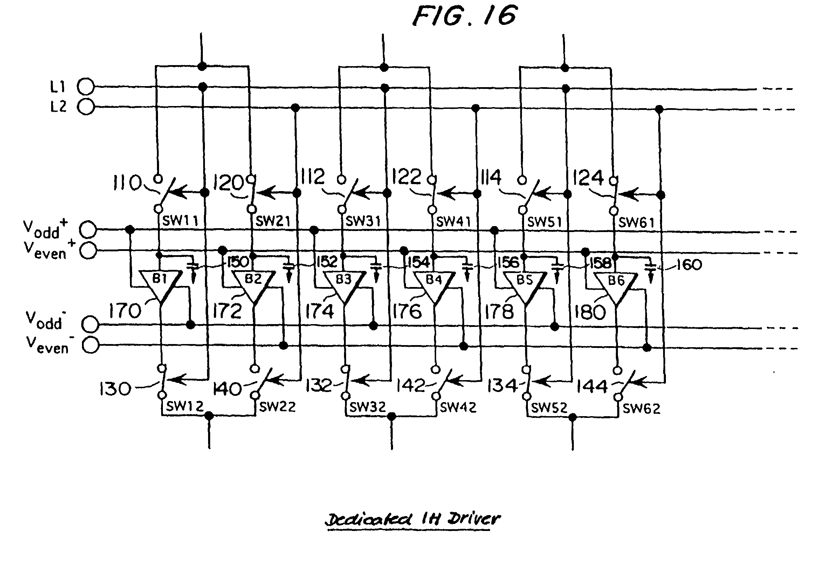

The configuration of a third embodiment of this invention is shown in Figure 16. The third embodiment relates to a liquid crystal driver for dedicated 1H driving. As in the first embodiment, there are two switch control lines in the third embodiment. Although there was a four-channel supply in the first embodiment, in this third embodiment there are Vodd⁺ , Vodd⁻ , Veven⁺ , and Veven⁻ supply lines forming a two-channel system. The first analog buffers 170, 174, and 178 receive supply voltages from the first supply lines Vodd⁺ and Vodd⁻ whereas the second analog buffers 172, 176, and 180 receive supply voltages from the second supply lines Veven⁺ and Even⁻. As a result, analog buffers 170, 174 and 178 can be made to differ in polarity from analog buffers 172, 176, and 180.

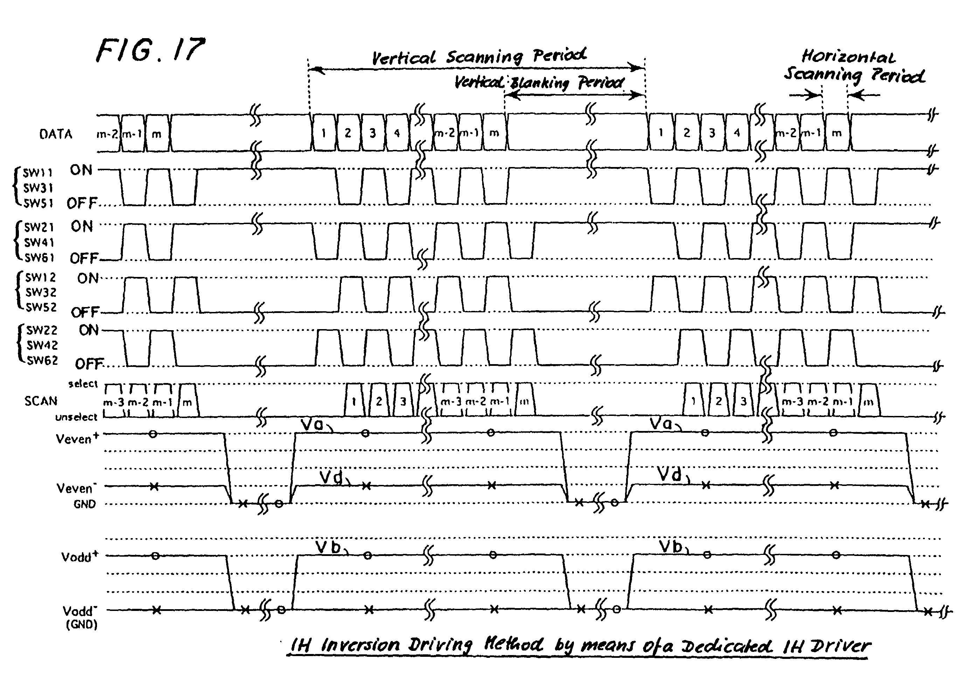

Figure 17 shows the timing chart for achieving 1 H inversion driving with the liquid crystal driver of Figure 16. The third embodiment operates similarly to the operations explained in Figures 6 and 7. In other words, in this third embodiment, by preparing a two channel supply voltage, the two analog buffers which form a pair which outputs a display signal to a single signal line can be made to be of different polarity. Further, the switch on-off sequence changes after each vertical scanning period. As a result of these mechanisms, 1H inversion driving can be realized. In comparison to the first embodiment, the number of supply lines can be decreased; the supply voltage control is simple; and the scale of the circuit can be decreased in the third embodiment. Further, using 1 H inversion driving, it is possible to produce high-quality liquid crystal displays.

### Embodiment 4

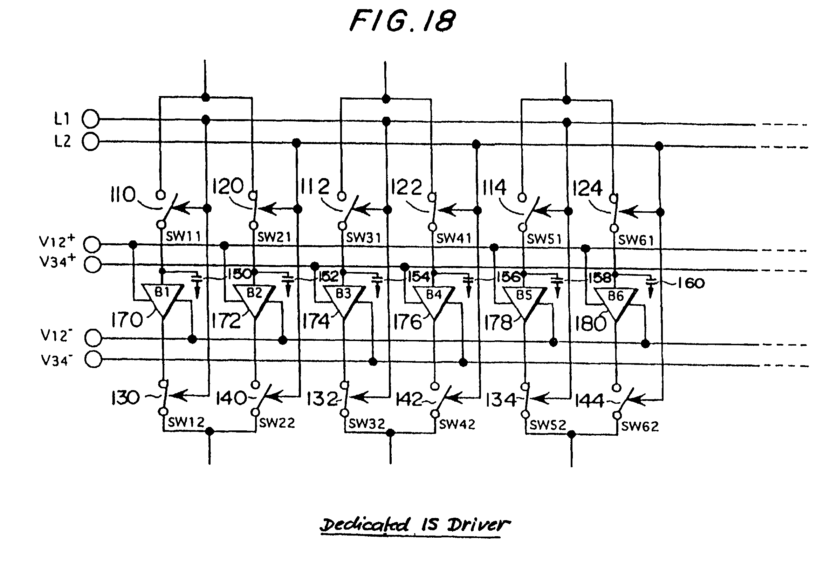

The configuration of a fourth embodiment of this invention is shown in Figure 18. The fourth embodiment relates to a liquid crystal driver for dedicated 1S driving. As in the first embodiment, there are two switch control lines in the fourth embodiment. Although there was a four-channel supply in the first embodiment, in this fourth embodiment there are V12⁺ , V12⁻ , V34⁺ , and V34⁻ supply lines forming a two-channel system. The first and second analog buffers 170, 172, 178 and 180 included in the odd-numbered signal driving means receive supply voltages from the first supply lines V12⁺ and V12⁻ whereas the first and second analog buffers 174 and 176 included in the even-numbered signal driving means receive supply voltages from the second supply lines V34⁺ and V34⁻. As a result, analog buffers 170 and 172 as well as 178 and 180 can be made to differ in polarity from analog buffers 174 and 176.

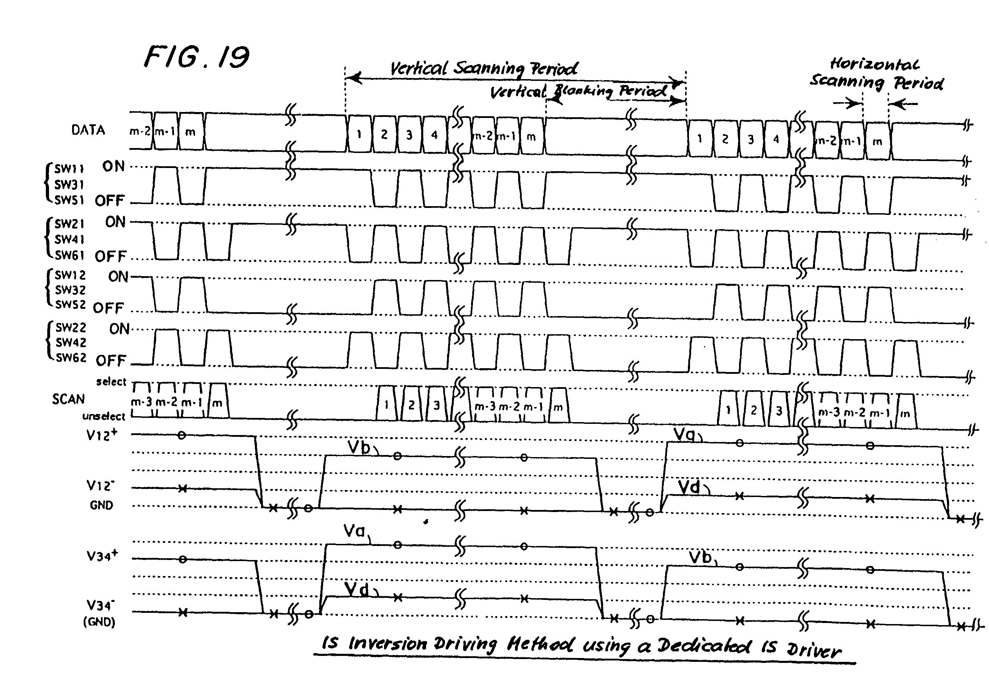

Figure 19 shows the timing chart for achieving 1 S inversion driving with the liquid crystal driver of Figure 18. The fourth embodiment operates similarly to the operations explained in Figures 9 and 10. In other words, in this fourth embodiment, first, by preparing a two-channel supply voltage, when considering the analog buffers in pairs which output display signals to a single signal line, both analog buffers in a pair have the same polarity; but the analog buffers of the adjacent pair are both of opposite polarity to that of the first pair. Additionally, the supply voltages are shifted after each vertical scanning period, and the polarities of all the analog buffers are reversed after every vertical scanning period. As a result, 1 S inversion scanning can be realized. In comparison to the first embodiment, the number of supply lines can be decreased; the supply voltage control is simple; and the scale of the circuit can be decreased in the fourth embodiment. Further, using 1S inversion driving, it is possible to produce high-quality liquid crystal displays.

### Example 5

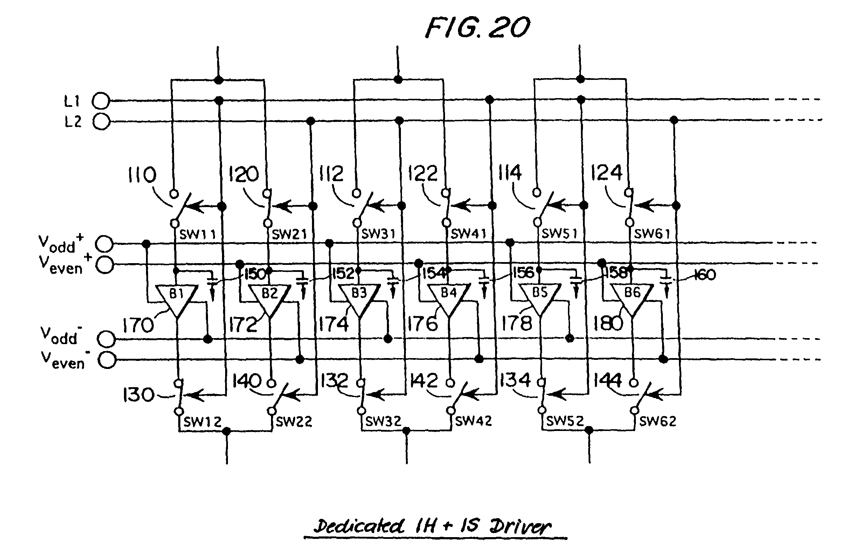

The configuration of a fifth embodiment of this invention is shown in Figure 20. The fifth embodiment relates to a liquid crystal driver for dedicated 1H + 1S driving. As in the first embodiment, there are two switch control lines in the fifth embodiment although the means of connection are different from the first embodiment. The switching control of the first and third switches 110, 130, 114, and 134 included in the odd-numbered signal driving means as well as the switching control of the second and fourth switches 122 and 142 included in the even-numbered signal driving means are controlled by the first switch control line L1. The switching control of the first and third switches 112 and 132 included in the even-numbered signal driving means as well as the switching control of the second and fourth switches 120, 140, 124, and 144 included in the odd-numbered signal driving means is controlled by the second switch control line L2. Although there was a four-channel supply in the first embodiment, in this fifth embodiment there are Vodd⁺, Vodd⁻ , Veven⁺ , and Veven⁻ supply lines forming a two-channel system. The first analog buffers 170, 174, and 178 receive supply voltages from the first supply lines Vodd ⁺ and Vodd- whereas the second analog buffers 172, 176, and 180 receive supply voltages from the second supply lines Veven⁺ and Veven⁻. As a result, analog buffers 170, 174, and 178 can be made to differ in polarity from analog buffers 172, 176, and 180.

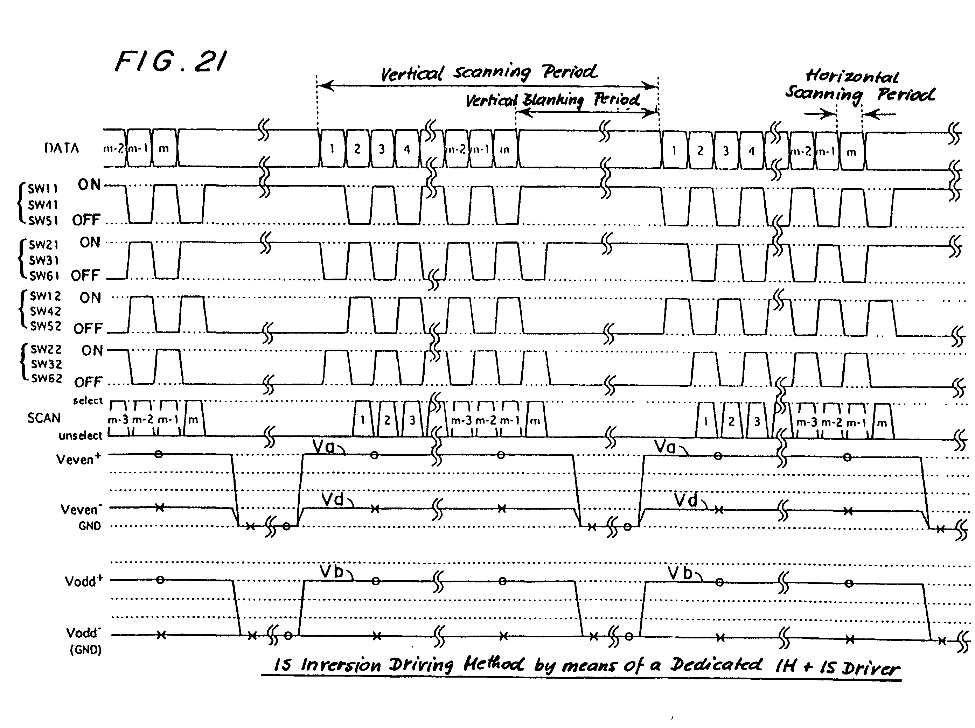

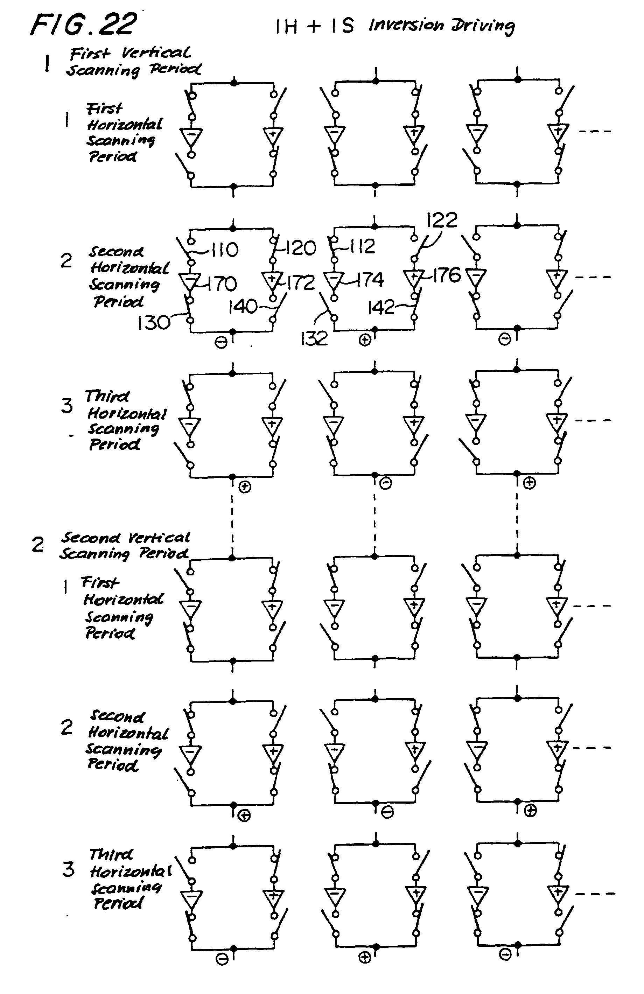

Figure 21 shows the timing chart for achieving 1H + 1S inversion driving with the liquid crystal driver of Figure 20. In addition, Figure 22 schematically shows the operation of this embodiment First, in this fifth embodiment, by preparing a two channel supply voltage, the two analog buffers which form a pair which outputs a display signal to a single signal line can be made to be of different polarity. For example, the polarities in pair 170 and 172 and pair 174 and 176 are different. And, grouping the four switches corresponding to a single signal line into one group, the switch on-off sequence can be made to differ for the neighboring group of switches. For example, the switch on-off sequence for switches 110, 120, 130, and 140 is different from that of switches 112, 122, 132, and 142. Additionally, the switch on-off sequence changes after each vertical scanning period. As a result, 1H + 1S inversion scanning can be realized.

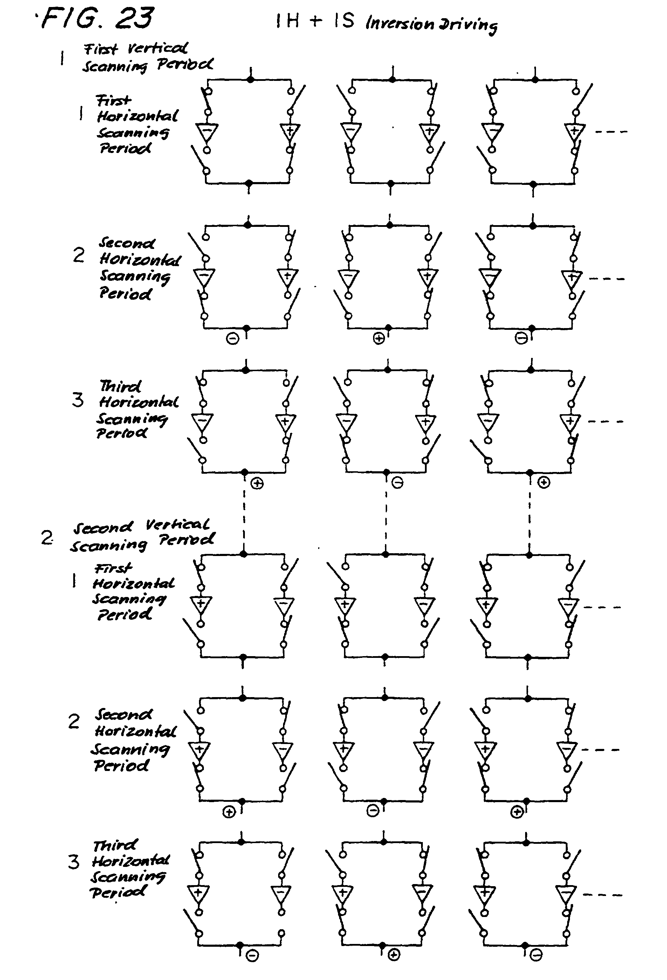

In order to invert the polarity of the voltage applied to the liquid crystal after each vertical scanning period, not only the method of alternating the on-off sequence of switches after each vertical scanning period as shown in Figure 22, but also the method of changing the polarity of all the analog buffers after each vertical scanning period as shown in Figure 23 is possible. 1 H + 1 S inversion driving can be achieved through this second method as well.

In comparison to the first embodiment, the number of supply lines can be decreased; the switch and supply line control is simple; and the scale of the circuit can be decreased in the fifth embodiment. Further, using 1 H + 1 S inversion driving, it is possible to produce high-quality liquid crystal displays.

### Embodiment 6

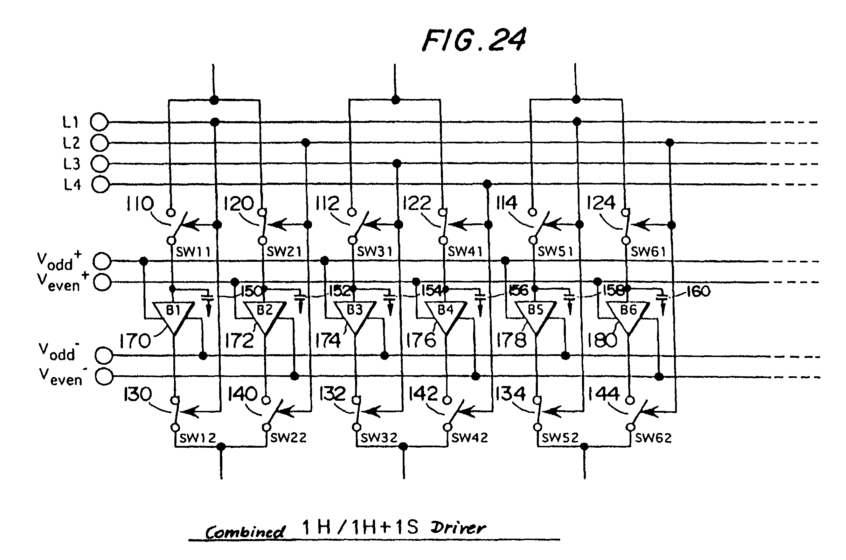

The configuration of a sixth embodiment of this invention is shown in Figure 24. The sixth embodiment relates to a liquid crystal driver for combined 1H/ 1H + 1S driving. In contrast to the first embodiment, there are four switch control lines in the sixth embodiment. Switching control of the first and third switches 110, 130, 114, and 134 included in the odd-numbered signal driving means is achieved through the first switch control line L1; and switching control of the second and fourth switches 120, 140, and 124 included in the odd-numbered signal driving means is achieved through the second switch control line L2. Switching control of the first and third switches 112 and 132 included in the even-numbered signal driving means is achieved through the third switch control line L3; and switching control of the second and fourth switches 122 and 142 included in the even-numbered signal driving means is achieved through the fourth switch control line L4. Consequently, it is possible to change the switch on-off sequence after each vertical scanning period. When the four switches corresponding to a single signal line are grouped together, it is also possible to make the switch on-off sequences for neighboring groups of switches different. Although a four-channel voltage supply was used in the first embodiment, the sixth embodiment has two channels including supply lines Vodd⁺, Vodd⁻ and Veven⁺, Veven-, respectively. Supply voltages are provided to the first analog buffers 170, 174, and 178 by means of the first supply lines Vodd⁺ and Vodd- while supply voltages are provided to the second analog buffers 172, 176, and 180 by means of the second supply lines Veven⁺ and Veven⁻. Consequently, it is possible for analog buffers 170, 174, and 178 to be of different polarity than analog buffers 172, 176, and 180.

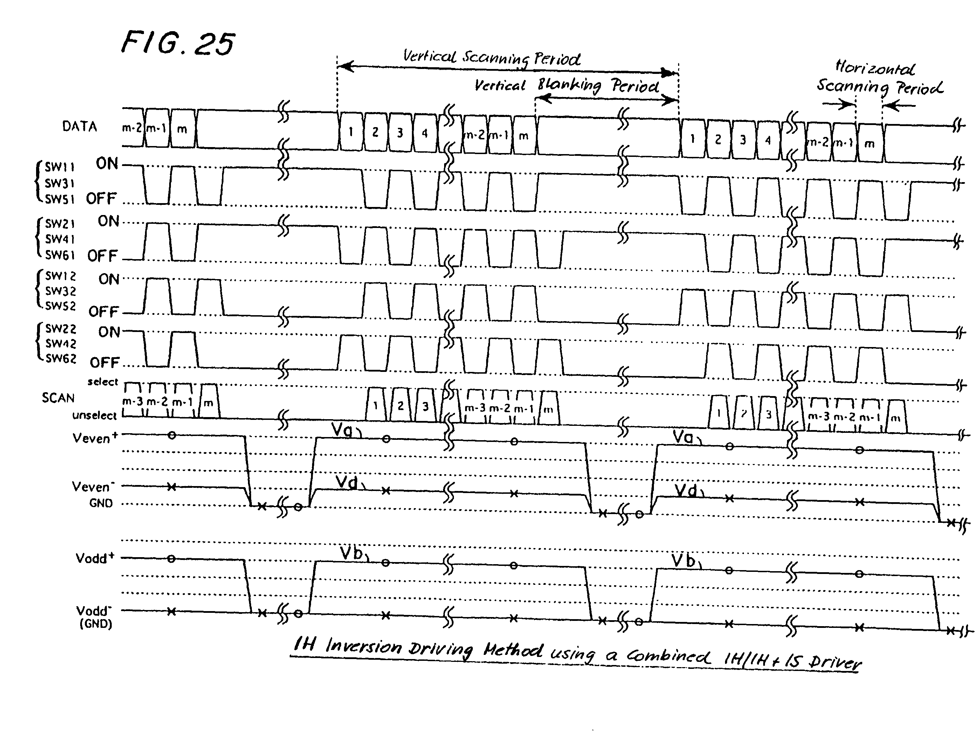

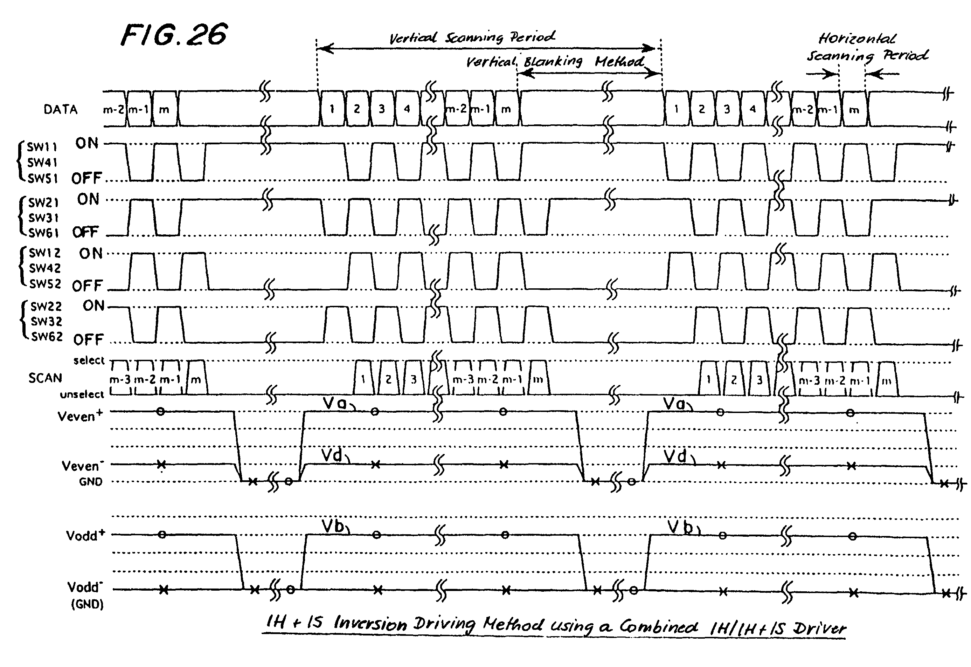

Figure 25 shows the timing chart for achieving 1H inversion driving with the liquid crystal driver of Figure 24. Since the timing chart in Figure 25 is identical to the timing chart in Figure 17 described previously, a description of the operating method will be omitted. Further, Figure 26 shows the timing chart for achieving 1H + 1S inversion driving with the liquid crystal driver of Figure 24. Since the timing chart in Figure 26 is identical to the timing chart in Figure 21 described previously, a description of the operating method will be omitted.

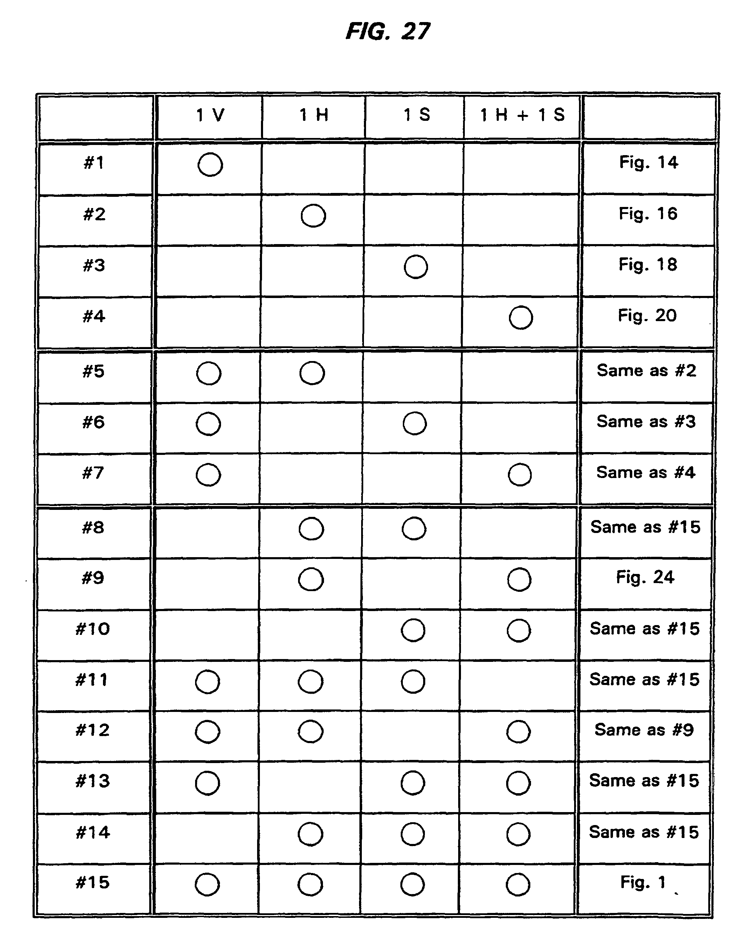

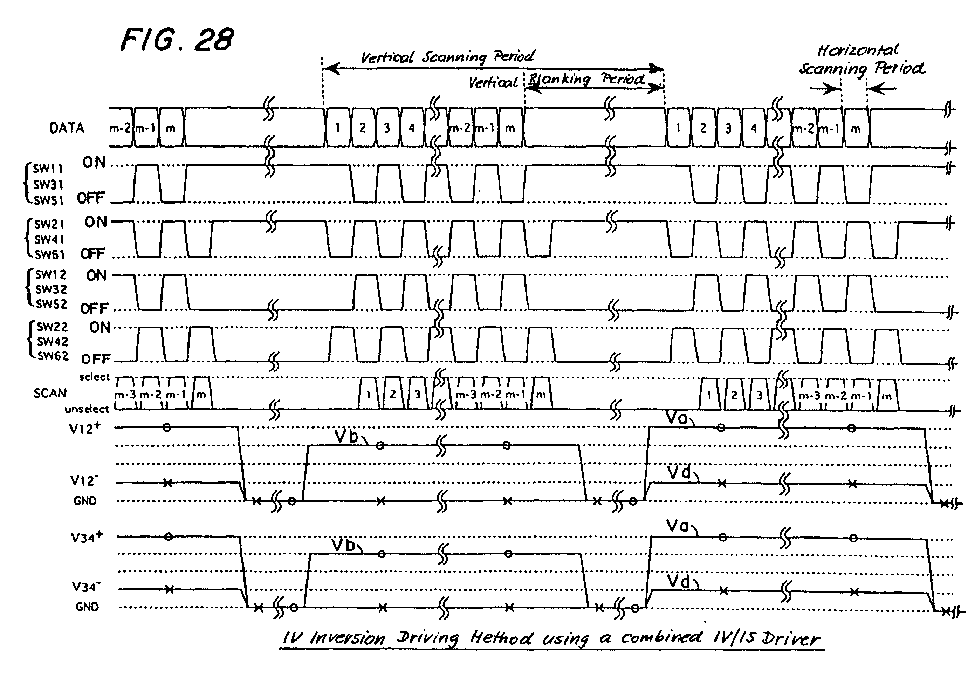

In embodiment 1 through 6 described above, explanations about the configurations of drivers for combined 1V/1H/1S/1H + 1S driving, dedicated 1V driving, dedicated 1H driving, dedicated 1S driving, dedicated 1H + 1S driving, and combined 1H/1H + 1S driving have been presented. Liquid crystal drivers aside from these can also be achieved using the various configurations presented in embodiment 1 through 6. For example, as shown in Figure 27, a driver for combined 1V/1S driving (#6) has the same configuration as that shown in Figure 18 (#3). Figure 28 shows the timing chart for achieving 1V inversion driving using a combined 1V/1S driver (which has the same configuration as a dedicated 1V driver). As shown in Figure 28, 1V inversion driving can be achieved by simply providing the same supply voltages to all the analog buffers, shifting the supply voltages after each vertical scanning period, and reversing the polarity of the analog buffers. Similarly, a combined 1V/1H driver (#5) has the same configuration as that shown in Figure 16 (#2); and a combined 1V/1H + 1S driver (#7) has the same configuration as that shown in Figure 20 (#2).

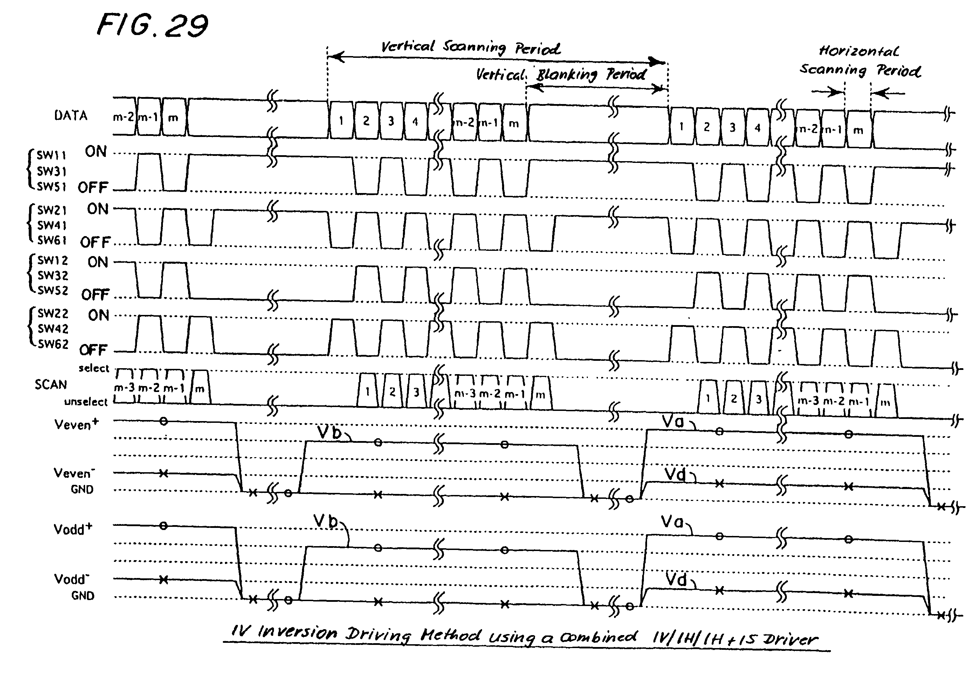

Further, a combined 1V/1H/1H + 1S driver (#12) has the same configuration as that shown in Figure 24 (#9). Figure 29 shows the timing chart for achieving 1V inversion driving using a combined 1V/1H/1H + 1S driver (which has the same configuration as a combined 1H/1H + 1S driver). As shown in Figure 29, 1V inversion driving can be achieved by simply providing the same supply voltages to all the analog buffers, shifting the supply voltages after each vertical scanning period, and reversing the polarity of the analog buffers.

Additionally, drivers for combined 1H/1S driving (#8), combined 1S/1H + 1S driving (#10), combined 1V/1H/1S driving (#11), combined 1V/1S/1H + 1S driving (#13), and combined 1H/1S/1H + 1S driving (#14) have the same configuration as that shown in Figure 1 (#15). This is because at least a four-channel voltage supply is necessary in order to achieve both 1H inversion driving and 1S inversion driving, or both 1S inversion driving and 1H + 1S inversion driving.

### Embodiment 7

The seventh embodiment relates to liquid crystal driver control circuits. Figure 30 shows an embodiment of the configuration of control circuits for controlling combined 1V/1H/1S/1H + 1S driver 200. The control circuits in this embodiment include supply voltage generator 201, supply voltage controller 202, counter 204, switch controller 206, and video signal generator 208. Supply voltage generator 201 includes buffers 210 through 216 and resistances 218 through 222. Voltages VA and VB are voltage divided by resistances 218 to 222, the divided voltages are then buffered by means of buffers 210 to 216, and then output to supply voltage controller 202. In this manner, four-channel supply voltages are generated for supplying supply lines V1⁺ to V4⁺ and V1⁻ to V4⁻. Signals DR_{1V}, DR_{1S}, DRV_{1H}, and DRV_{1H + 1S} are provided for determining which driving methods of 1V, 1S, 1H, and 1H + 1S are to be selected. Based on signals DR_{1V}, DR_{1S}, DRV_{1H}, and DRV_{1H+1S}, supply voltage controller 202 controls the values of the supply voltages provided to supply lines V1⁺ to V4⁺ and V1⁻ to V4⁻. By control of these supply voltages, the polarity of the analog buffers can be controlled. Similarly, based on signals DR_{1V}, DR_{1S}, DRV_{1H}, and DRV_{1H+1S}, switch controller 206 controls the switch on-off functions using switch control lines L1 and L2. By this type of control, it is possible to control the switch on-off sequences.

Based on signals VSYNC, HSYNC, and EXTCLK, counter 204 controls the on-off functions of switches 230 to 236.

Video signal generator 208, in addition to generating the video signals which must be input to combined 1V/1H/1S/1H + 1S driver 200 also performs level shifting and other functions on the generated video signals. For example, when the analog buffer output voltage range shifts, it is also necessary to shift the video signal voltage level. Video signal generator 208 can also perform this type of level shift function.

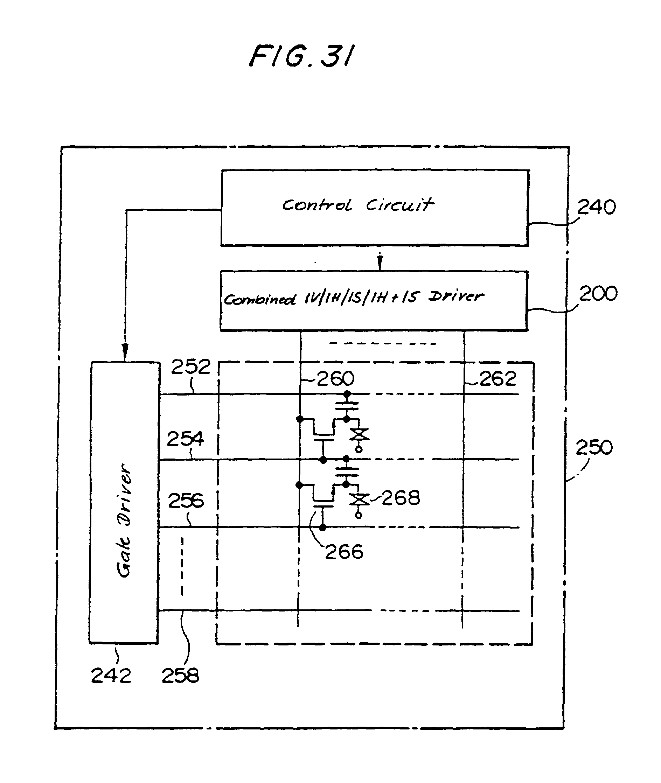

Figure 31 shows an example of the configuration of an entire liquid crystal panel 250 including the combined 1V/1H/1S/1H + 1S driver 200. Gate driver 242 drives scan lines 252 to 258 which are connected to the gate electrodes of TFT 266. Additionally, combined 1V/1H/1S/1H + 1S driver 200 drives signal lines 260 and 262 which are connected to the source regions of TFT 266. These drivers are controlled by control circuit 240, and this control makes possible a liquid crystal display using liquid crystal 268. In this case in the present example, combined 1V/1H/1S/1H + 1S driver 200, control circuits 240, and gate driver 242 are integrated upon liquid crystal panel 250. By means of such integration, it is possible to dramatically decrease the size and cost of a liquid crystal display. In this case, it is necessary to have these liquid crystal drivers composed of TFTs as well. Therefore, in this case, particularly, it is desirable to have liquid crystal drivers composed of relatively high mobility poly (polycrystalline) silicon TFTs.

Although Figures 30 and 31 show the configuration of control circuits and liquid crystal panels corresponding to a combined 1V/1H/1S/1H + 1S driver, the configuration of control circuits and liquid crystal panels for other combined drivers or dedicated drivers is the same. Also, although Figure 31 shows liquid crystal drivers and control circuits all integrated on liquid crystal panel 250, it is also possible to have only one part integrated. It is also possible to have the combined 1V/1H/1S/1H + 1S driver composed of single crystal CMOS transistors and provided on the periphery of the liquid crystal panel.

### Analog Buffers Composed of TFTs

When the liquid crystal drivers are integrated on the liquid crystal panel as in Figure 31, the analog buffers are comprised of TFTs (thin film transistors).

There are differences between TFT analog buffers and single crystal CMOS analog buffers as described below. First, for TFTs compared to single crystal CMOS, the region over which the output voltage is roughly linear with respect to the input voltage is extremely narrow. In comparison to the case for single crystal CMOS in which the linear range with respect to supply voltage is about 70%, the range is only about 40% for TFTs. The reasons for this include the fact that for TFTs, the ΔIDS/ΔVDS value (IDS is the current between the drain and source, and VDS is the voltage between drain and source) in the saturation region of the transistor characteristics is large, and the performance of the constant current supplies integrated in the buffers is worse than for single crystal CMOS. Additionally, the threshold voltage for TFTs is higher than for single crystal CMOS leading to the need for a high voltage of 12 V or higher for the driving voltage. Finally, the offset values for TFT buffers are larger than for single crystal CMOS buffers and can be around 500 mV in the worst case (the offset is about 20 mV for single crystal CMOS).

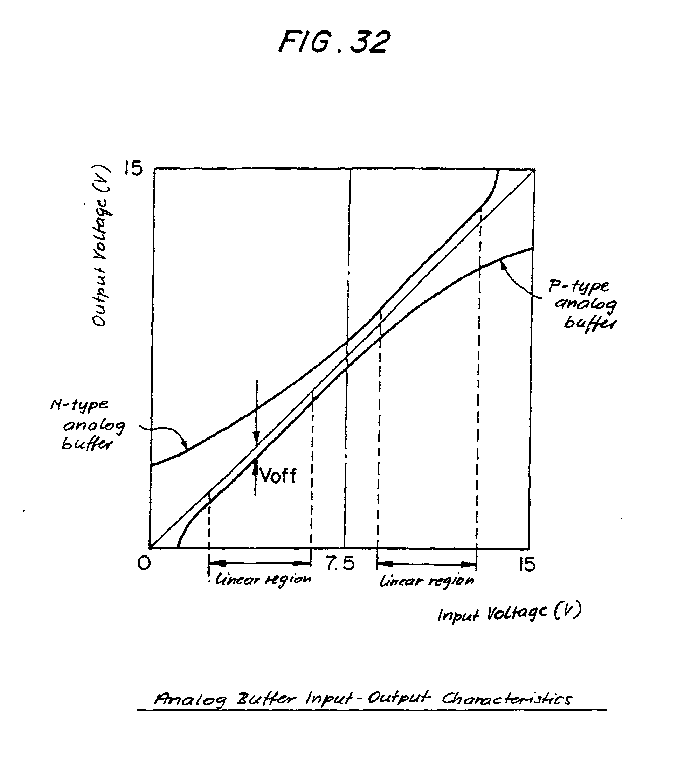

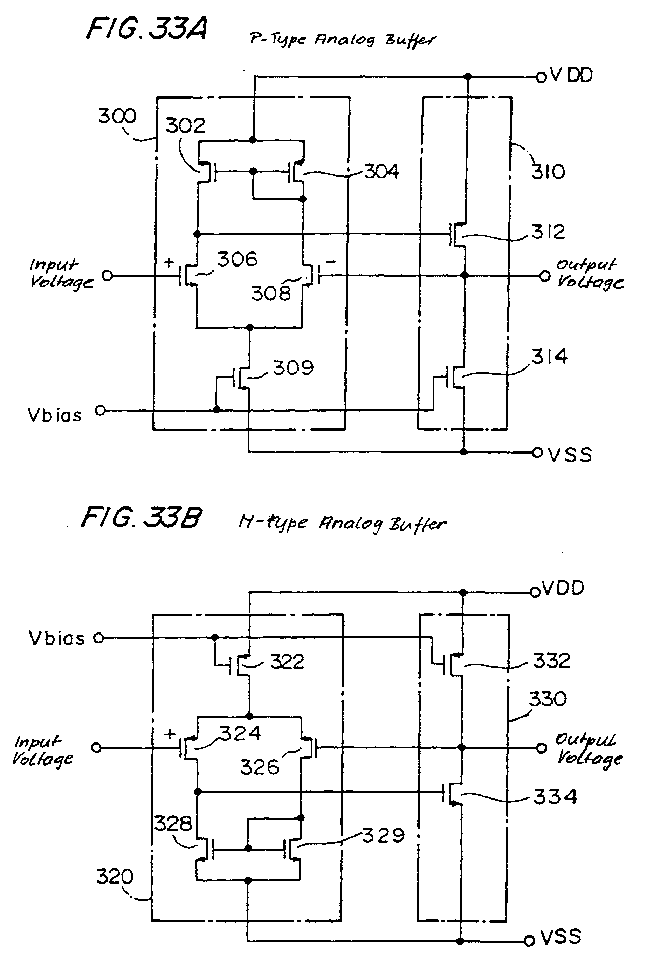

Figure 32 shows examples of the input and output characteristics for p-type and n-type analog buffers comprised of TFTs. Figures 33A and 33B show examples of the configuration of p-type and n-type analog buffers, respectively. As shown in Figure 33A, the p-type analog buffer consists of the differential amplifier 300 (differential stage) and the driver 310 (driving means), and the driver 310 includes p-channel driving transistor 312. In differential amplifier 300, the voltage difference between the input voltage and the output voltage is amplified. The output of the differential amplifier 300 is connected to the gate electrode of the p-channel driving transistor 312, and the output voltage of the p-type analog buffer is output from the drain region. The output of the p-type analog buffer is input into the minus terminal of differential amplifier 300 (gate electrode of transistor 308). In other words, this analog buffer is composed of a source follower connected to an operational amplifier. Transistors 309 and 314 are constant current sources (or resistances).

As shown in Figure 33B, the n-type analog buffer consists of the differential amplifier 320 and the driver 330, and the driver 330 includes n-channel driving transistor 334. In this fashion, in the p-type analog buffer the output voltage is driven by p-channel transistor 312; and, in the n-type analog buffer, the output voltage is driven by n-channel transistor 334.

As can be understood from the input-output characteristics in Figure 32, the linear region of TFT analog buffers is extremely narrow. This linear region occurs at low voltages for p-type analog buffers and at high voltages for n-type analog buffers. Also, again as shown in Figure 32, the value of the offset voltage Voff is very high for TFT analog buffers.

As mentioned previously, when driving a liquid crystal using analog buffers, it is necessary to invert the voltage applied to the liquid crystal with respect to the counter voltage (common voltage). When using a single buffer to cover the entire voltage range, however, it is necessary to fabricate the analog buffers with a high break-down voltage thereby leading to an increase in scale and price. On the other hand, it is also possible to consider a method in which a p-type analog buffer is used for negative polarities as shown in Figure 33A, and an n-type analog buffer is used for positive polarities as shown in Figure 33B. Using this method, it is possible to fabricate analog buffers with a process resulting in a low break-down voltage. In this method, however, because of differences in the characteristics of p-type and n-type analog buffers, the problem of display quality degradation arises. This is a result of the difference between the offset values for p-type and n-type analog buffers which gives rise to display signal distortion. Additionally, in such a method which mixes p-type and n-type analog buffers, the realization of liquid crystal drivers which can combine multiple driving means as in Examples 1 to 6 is difficult.

In order to solve the problems mentioned above, a method which shifts the supply voltage from VDDH and VSSH to VDDL and VSSL, or, conversely from VDDL and VSSL to VDDH and VSSH as shown in Figure 34A can be considered. In this case, the video signal also is level shifted to match these shifts in supply voltage. Consequently, by shifting the supply voltage to VDDH or VSSH and VDDL or VSSL, it is possible to make the analog buffers positive or negative, respectively. As a result, it is possible to apply a voltage whose polarity switches between positive and negative with respect to the counter voltage to the liquid crystal element. This method is similar to the prior art described in Japanese Unexamined Patent Application Heisei 6-222741. In this method, VDDH, VDDL, VSSH, and VSSL are symmetric about Vcom.

This method, however, is good when the analog buffers consist of single crystal CMOS transistors, but not so good when the analog buffers consist of TFTs. This is because TFT analog buffers have narrow linear regions as shown in Figure 32 with the result being that it is necessary to carry out buffering in the method shown in Figure 34A using the nonlinear regions. Buffering with nonlinear regions leads to extreme decreases in display quality.

Consequently, in this example, keeping in mind the input and output characteristics of TFT analog buffers as shown in Figure 32, a method which shifts the supply voltage as shown in Figure 34B when using p-type analog buffers and which shifts the supply voltage as shown in Figure 34C when using n-type analog buffers is employed. In other words, in this example, the supply voltages provided to analog buffers, composed of TFTs, and having linear regions in which the relationship between the input and output voltages is approximately linear, are controlled. When the input voltage amplitude has been shifted, this supply voltage control can be realized by controlling the high potential and low potential supply voltage so that the voltage amplitude is included in the linear region.

More specifically, in Figure 34B, let the supply voltages provided to the analog buffers shift between, for example, Vdd = 15 V, VSS = 0 V and VDD = 20 V, VSS = 5 V. The counter voltage Vcom is about 5 V. Therefore, when Vdd = 15 V and VSS = 0 V, the analog buffer output voltage range is negative with respect to Vcom as a reference and the p-type analog buffer becomes a negative polarity analog buffer. Conversely, when VDD = 20 V and VSS = 5 V, the analog buffer output voltage range is positive with respect to Vcom as a reference and the p-type analog buffer becomes a positive polarity analog buffer. By alternately switching the analog buffer polarity between positive and negative, alternating current driving with respect to the liquid crystal is possible. In Figure 35A, the p-type analog buffer input/output characteristics are shown when the supply voltage shifts as described above. When the p-type analog buffer is used with negative polarity, the supply voltage range is as shown by X in Figure 35A. As can be clearly seen from the figure, because the input voltage range from 1 V to 4 V is linear, it is possible to buffer video signal 340 in Figure 34B using a linear region and a precise gray-scale display is possible. Further, when the p-type analog buffer is used with positive polarity, the supply voltage range is as shown by Y in Figure 35A. Here, as can be clearly seen from the figure, because the input voltage range from 6 V to 9 V is linear, it is possible to buffer video signal 342 in Figure 34B using a linear region and a precise gray-scale display is possible.

Additionally, in this case, the offset values Voffa and Voffb shown in Figure 35A are the same value. This is because the curves X1 and Y1 in Figure 35A are curves from the same p-type analog buffer with only a supply voltage shift. When the offset value Voffa when the analog buffer has negative polarity and the offset value Voffb when the analog buffer has positive polarity are identical, by adjusting the counter voltage Vcom value by only Voffa = Voffb, the effect of the offset voltage can be canceled and it is possible to prevent distortion of the video signal arising from buffering by analog buffers.

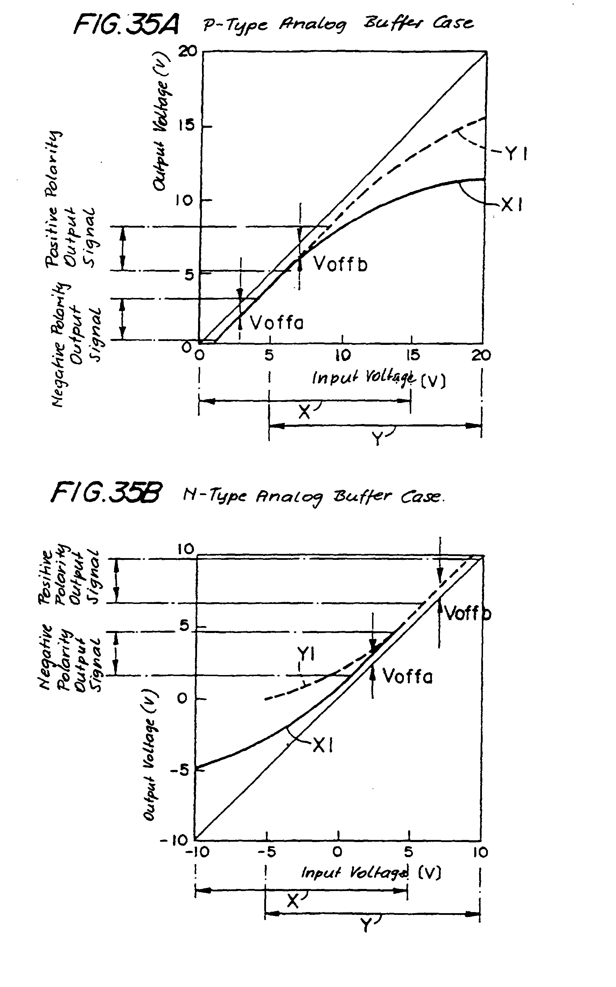

As shown in Figure 34C in which the analog buffer is used as an n-type device, it is again possible to buffer the video signal with the linear region in exactly the same way as described above. The analog input/output characteristics for this case are shown in Figure 35B. When using an n-type analog buffer, however, a -10 V supply voltage is necessary as can be seen clearly in Figure 34C. Also, when the analog buffer supply voltage VDD = 10 V and VSS = -5 V, video signal 344 swings between 6 V and 9 V. At this point, in order to transmit this video signal to analog buffers 170 to 180 via switches 104, 106, and 108 in Figure 1, for example, it is necessary to increase the output of level shifter 102 to higher than 10 V - for example, a voltage of around 15 V is necessary. The reason for this is that switches 104, 106, and 108 are normally composed of n-type transistors and the threshold voltage of n-type transistors increases as a result of an effect known as the "body effect" when the video signal is in the range of 6 V to 9 V. Consequently, in this case, the liquid crystal drivers require supply voltages of -10 V to 15 V leading to a situation in which the TFTs comprising the liquid crystal drivers cannot withstand the voltages. In contrast, when p-type analog buffers are used, with VDD = 20 V and VSS = 5 V, since the video signal 342 swings within the range of 9 V to 6 V, a supply voltage of 20 V or more is not necessary and switches 104, 106, and 108 can turn on and off by means of the output of level shifter 102 without difficulties. Additionally, when VDD = 15 V and VSS = 0 V, since video signal 340 swings between 1 V and 4 V, switches 104, 106, and 108 can turn on and off by means of the output of level shifter 102 without difficulties. As a result, a supply voltage range of 0 V to 20 V is necessary for the liquid crystal driver and the problem of TFT breakdown can be prevented. Therefore, in this respect, it is advantageous to use p-type analog buffers rather than n-type analog buffers.

The present invention is not limited to embodiments 1 to 7 described above. Various modified embodiments are also possible within the range of the main points of this invention.

For example, although the configuration of these embodiments has two analog buffers and four switches for each signal line, the present invention is not limited to this; and it is possible to use various other configurations. For example, switches 110 and 120 in Figure 1 can be substituted by a single switch or a configuration with three or more analog buffers could also be used. Additionally, the analog buffer output selection means are not limited to configurations such as those with switches 130 and 140.

Further, as for the case in which the select voltage (SCAN in Figure 4) becomes effective (select) when the applied voltage from the signal driving means takes effect, the method in which the select voltage becomes effective after sequentially delaying by a single horizontal scanning period is not limited to liquid crystal driving devices having a configuration as described in Figure 1 and others, but is applicable to liquid crystal driving devices with various configurations.

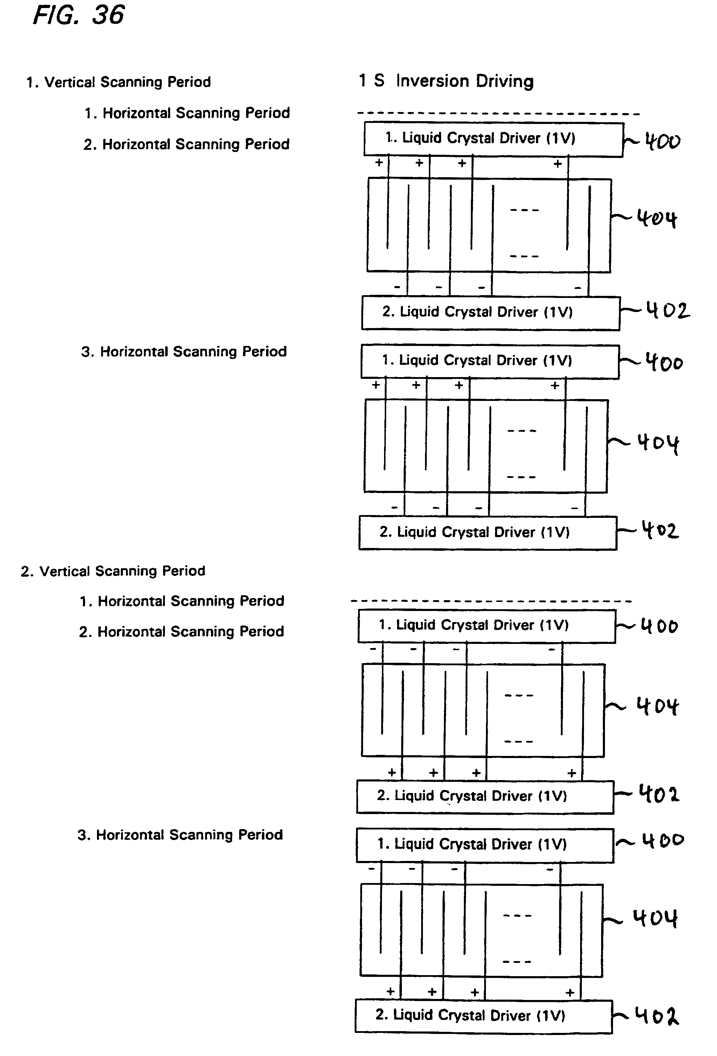

In this invention, it is also possible to place the liquid crystal drivers described in the preceding embodiments at the top and bottom edges of the liquid crystal panel and alternately connect the signal lines to the top and bottom drivers. For example, in Figure 36, the first and second drivers 400 and 402 are located at the top and bottom of liquid crystal panel 404 (it is also possible to have the liquid crystal drivers integrated on the liquid crystal panel). Here, combined drivers described in Examples 1 and 6 and Figure 27 operated in the 1V inversion driving mode, or dedicated 1V drivers described in Example 2 are used as the first and second liquid crystal drivers 400 and 402. Odd-numbered signal lines are connected to the signal driving means of the first liquid crystal driver 400, and even-numbered signal lines are connected to the signal driving means of the second liquid crystal driver 402. The output voltage range of the analog buffers selected by the signal driving means of the first liquid crystal driver 400 are shifted in the opposite direction from the output voltage range of the analog buffers selected by the signal driving means of the second liquid crystal driver 402 using the counter voltage as a reference. By so doing, as shown in Figure 36, during the first vertical scanning period, the output of the first liquid crystal driver 400 is positive; and the output of the second liquid crystal driver 402 is negative. Then, during the second vertical scanning period, the output of the first liquid crystal driver 400 is negative; and the output of the second liquid crystal driver 402 is positive. In other words, it is possible to achieve 1S inversion driving as shown in Figure 40C using the 1V inversion driving first and second liquid crystal drivers 400 and 402.

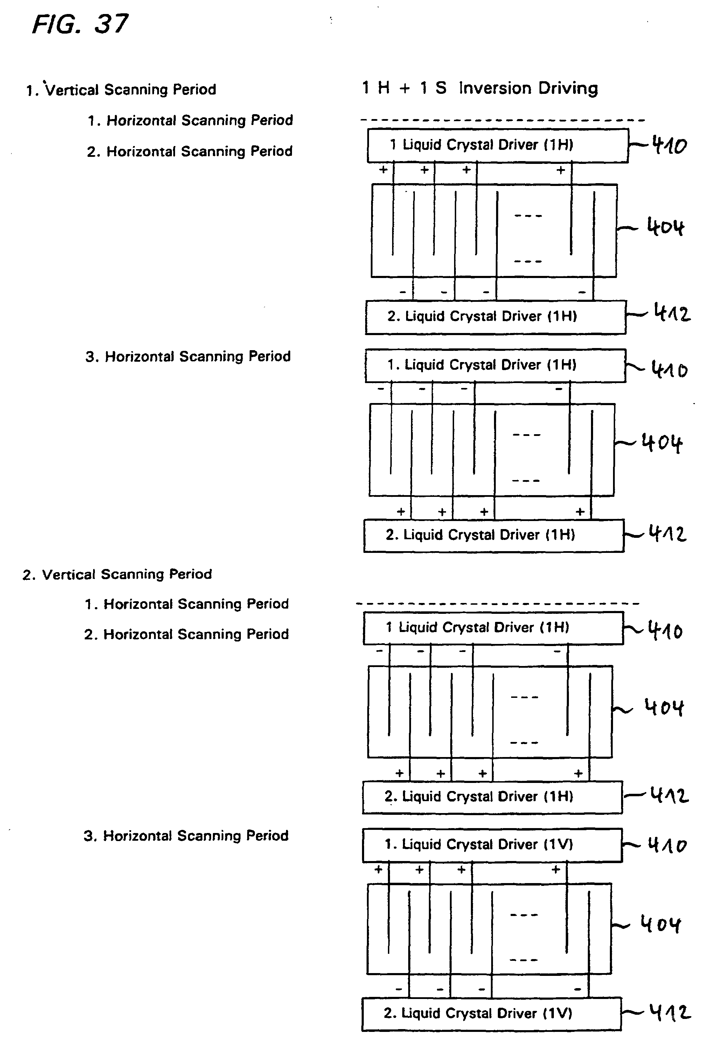

On the other hand, Figure 37 differs from Figure 36 in that the combined drivers described in embodiment 1 and Figure 27 operated in the 1H inversion driving mode, or dedicated 1H drivers described in embodiment 3 are used as the first and second liquid crystal drivers 410 and 412. By so doing, as shown in Figure 37, during the second horizontal scanning period of the first vertical scanning period, the outputs of the first and second liquid crystal drivers 410 and 412 are positive and negative, respectively. During the third horizontal scanning period, the outputs are negative and positive, respectively.

During the second horizontal scanning period of the second vertical scanning period, the outputs of the first and second liquid crystal drivers 410 and 412 are negative and positive, respectively; and, during the third horizontal scanning period, the outputs are positive and negative, respectively. In other words, it is possible to achieve 1H + 1S inversion driving as shown in Figure 40D using the 1H inversion driving first and second liquid crystal drivers 410 and 412.

When using analog buffers in liquid crystal drivers as explained in embodiments 1 to 6, for example, it is also not absolutely necessary to shift the supply voltage using the method shown in Figures 34B and 34C. For example, it is also permissible to shift the voltage supply by the method shown in Figure 34A, and alternate the polarity of the analog buffers. Especially when the liquid crystal drivers are composed of single crystal CMOS silicon, use of the method in Figure 34A is appropriate.

The configuration of the analog buffers, too, is not limited to those shown in Figure 33A and Figure 33B. For example, it is permissible to use configurations of the differential amplifier and driver different from those in Figures 33A and 33B.

The shift range of the supply voltage supplied to the analog buffers is also not restricted to that shown in Figures 34B and 34C, and can change depending on the TFT characteristics and the analog buffer circuit configurations.

Further, this invention is not restricted to polycrystalline silicon TFTs, but may also naturally be applied to amorphous (non-crystalline) silicon TFTs.

## Claims

1. A liquid crystal driving device for driving liquid crystal picture elements arrayed in a matrix by selectively applying a voltage to one side of each liquid crystal picture element, to the other side of which is supplied a counter voltage, a respective voltage being applied to said liquid crystal picture elements, row by row of said matrix, wherein a horizontal scanning period is defined as the time for applying said voltages to all liquid crystal picture elements in a respective row, and a vertical scanning period comprises once applying said voltages to all liquid crystal picture elements of the matrix, said driving device comprising:
a plurality of signal driving means, each including means (100, 102, 104) for sequentially sampling and holding a video signal, multiple analog buffers (170, 172) for buffering the output voltage of said sampling and holding means said buffers having a high potential power supply terminal and a low potential power supply terminal, and selection means (110, 120, 130, 140) for selecting the output from any one of said multiple buffers for application to a respective liquid crystal picture element;
supply voltage control means (201, 202, 204, 230-236) for controlling the voltages applied to said high and low potential power supply terminals of said analog buffers so as to shift the range of the output voltage of said analog buffers to either above or below said counter voltage; and
selection control means (206) for controlling said selection means.

2. The device of claim 1, wherein each signal driving means comprises
a first and a second switching means (110, 120),
a first and a second analog buffer (170, 172) for buffering the output voltage of said sampling and holding means transmitted via said first switching means and said second switching means, respectively,
a third switching means (130) which is connected between the output of said first analog buffer (170) and the output of the signal driving means, and
a fourth switching means (140) which is connected between the output of said second analog buffer (172) and the output of the signal driving means,
said first and fourth switching means being controllable to be both on or both off and said third and second switching means being controllable to be both on or both off;
wherein said supply voltage control means (201, 202, 204, 230-236) is adapted to control the voltages applied said high and low potential power supply terminals of said first and second analog buffers; and
wherein switch control means (206) is provided for controlling said first through fourth switching means.

3. The device of claim 2 adapted to switch the shift direction of the output voltage range of said first and second analog buffers each vertical scanning period thereby to perform frame inversion driving.

4. The device of claim 2 adapted to make the shift directions of the output voltage range of said first and second analog buffers of a respective signal driving means different from one another and to switch the on-off sequence of said first through fourth switching means each vertical scanning period thereby to perform scan line inversion driving.

5. The device of claim 2 adapted to make the shift directions of the output voltage range of said first and second analog buffers of a respective signal driving means different from one another and to switch theses shift directions each vertical scanning period thereby to perform scan line inversion driving.

6. The device of claim 2 adapted to make the shift directions of the output voltage range of said first and second analog buffers of a respective signal driving means the same but different from that of the adjacent said signal driving means, and to switch the shift directions each vertical scanning period thereby to perform signal line inversion driving.

7. The device of claim 2 adapted to make, for all signal driving means, the shift directions of the output voltage range of the respective first and second analog buffers different from one another and to switch the on-off sequence of said first through fourth switching means each vertical scanning period thereby to perform dot inversion driving.

8. The device of claim 2 adapted to make, for all signal driving means, the shift directions of the output voltage range of the respective first and second analog buffers different from one another and to switch these shift directions each vertical scanning period thereby to perform dot inversion driving.

9. The device of claim 2 adapted to make, for all signal driving means, the shift directions of the output voltage range of the respective first and second analog buffers different from one another, to make the on-off sequences of said first through fourth switching means of each pair of adjacent signal driving means different from each other, and to switch the on-off sequences each vertical scanning period thereby to perform dot inversion driving.

10. The device of claim 2 adapted to make, for all signal driving means, the shift directions of the output voltage range of the respective first and second analog buffers different from one another, to switch these shift directions each vertical scanning period, and to make the on-off sequences of said first through fourth switching means of each pair of adjacent signal driving means different from each other thereby to perform dot inversion driving.

11. The device of claim 2, further comprising
a first pair of supply lines (V1⁺, V1⁻) to which said high and low potential power supply terminals, respectively, of the first analog buffer (170; 178) of all odd-numbered signal driving means are connected;
a second pair of supply lines (V2⁺, V2⁻) to which said high and low potential power supply terminals, respectively, of the second analog buffer (172; 180) of all odd-numbered signal driving means are connected;
a third pair of supply lines (V3⁺, V3⁻) to which said high and low potential power supply terminals, respectively, of the first analog buffer (174) of all even-numbered signal driving means are connected;
a fourth pair of supply lines (V4⁺, V4⁻) to which said high and low potential power supply terminals, respectively, of the second analog buffer (176) of all even-numbered signal driving means are connected;
a first switch control line (L1) for controlling said first and third switching means (100, 130; 112, 132; 114; 134); and
a second switch control line (L2) for controlling said second and fourth switching means (120, 140; 122, 142; 124, 144);
wherein said supply voltage control means (201, 202, 204, 230-236) includes a means for controlling the values of the high potential supply voltages and low potential supply voltages which are supplied to said first through fourth pairs of supply lines, and said switch control means (206) includes a means for controlling switch signals which are supplied to said first and second switch control lines.

12. The device of claim 2, further comprising
a pair of supply lines (V⁺, V⁻) to which said high and low potential power supply terminals, respectively, of the first and second analog buffers (170-180) of said signal driving means are connected;
a first switch control line (L1) for controlling said first and third switching means (110, 112, 114, 130, 132, 134); and
a second switch control line (L2) for controlling said second and fourth switching means (120, 122, 124, 140, 142, 144);
wherein said supply voltage control means includes a means for controlling the values of the high potential supply voltage and low potential supply voltage which are supplied to said pair of supply lines, and said switch control means includes a means for controlling switch signals which are supplied to said first and second switch control lines.

13. The device of claim 2, further comprising
a first pair of supply lines (V_{odd}⁺, V_{odd}⁻) to which said high and low potential power supply terminals, respectively, of the first analog buffer (170, 174, 178) of said signal driving means are connected;
a second pair of supply lines (Vₑᵥₑₙ⁺, Vₑᵥₑₙ⁻) to which said high and low potential power supply terminals, respectively, of the second analog buffer (172, 176, 180) of said signal driving means are connected;
a first switch control line (L1) for controlling said first and third switching means (110, 112, 114, 130, 132, 134); and
a second switch control line (L2) for controlling said second and fourth switching means (120, 122, 124, 140, 142, 144);
wherein said supply voltage control means includes a means for controlling the values of the high potential supply voltages and low potential supply voltages which are supplied to said first and second pairs of supply lines, and said switch control means includes a means for controlling switch signals which are supplied to said first and second switch control lines.

14. The device of claim 2, further comprising
a first pair of supply lines (V₁₂⁺, V₁₂⁻) to which said high and low potential power supply terminals, respectively, of the first and second analog buffers (170, 172, 178, 180) of the odd-numbered signal driving means are connected;
a second pair of supply lines (V₃₄⁺, V₃₄⁻) to which said high and low potential power supply terminals, respectively, of the first and second analog buffers (174, 176) of the even-numbered signal driving means are connected;
a first switch control line (L1) for controlling said first and third switching means (110, 112, 114, 130, 132, 134); and
a second switch control line (L2) for controlling said second and fourth switching means (120, 122, 124, 140, 142, 144);
wherein said supply voltage control means includes a means for controlling the values of the high potential supply voltages and low potential supply voltages which are supplied to said first and second pairs of supply lines, and said switch control means includes a means for controlling switch signals which are supplied to said first and second switch control lines.

15. The device of claim 2, further comprising
a first pair of supply lines (V_{odd}⁺, V_{odd}⁻) to which said high and low potential power supply terminals, respectively, of the first analog buffer (170, 174, 178) of said signal driving means are connected;
a second pair of supply lines (Vₑᵥₑₙ⁺, Vₑᵥₑₙ⁻) to which said high and low potential power supply terminals, respectively, of the second analog buffer (172, 176, 180) of said signal driving means are connected;
a first switch control line (L1) for controlling the first and third switching means (110, 130, 114, 134) of the odd-numbered signal driving means and the second and fourth switching means ( 122, 142) of the even-numbered signal driving means; and
a second switch control line (L2) for controlling the first and third switching means (112, 132) of the even-numbered signal driving means and the second and fourth switching means (120, 140, 124, 144) of the odd-numbered signal driving means;
wherein said supply voltage control means includes a means for controlling the values of the high potential supply voltages and low potential supply voltages which are supplied to said first and second pairs of supply lines, and said switch control means includes a means for controlling switch signals which are supplied to said first and second switch control lines.

16. The device of claim 2, further comprising
a first pair of supply lines (V_{odd} ⁺, V_{odd}⁻) to which said high and low potential power supply terminals, respectively, of the first analog buffer (170, 174, 178) of said signal driving means are connected;
a second pair of supply lines (Vₑᵥₑₙ⁺, Vₑᵥₑₙ⁻) to which said high and low potential power supply terminals, respectively, of the second analog buffer (172, 176, 180) of said signal driving means are connected;
a first switch control line (L1) for controlling the first and third switching means (110, 130, 114, 134) of the odd-numbered signal driving means;
a second switch control line (L2) for controlling the second and fourth switching means (120, 140, 124, 144) of the odd-numbered signal driving means; and
a third switch control line (L3) for controlling the first and third switching means (112, 132) of the even-numbered signal driving means; and
a fourth switch control line (L4) for controlling the second and fourth switching means (122, 142) of the even-numbered signal driving means;
wherein said supply voltage control means includes a means for controlling the values of the high potential supply voltages and low potential supply voltages which are supplied to said first and second pairs of supply lines, and said switch control means includes a means for controlling switch signals which are supplied to said first through fourth switch control lines.

17. The device of claim 2, wherein said matrix of liquid crystal picture elements includes a plurality of signal lines (260, 262) and a plurality of scan lines (252-258), said signal driving means being connected to said signal lines and scan driving means (242) being provided for selectively applying, in successive horizontal scanning periods (1H), a select voltage to a respective one of said scan lines in order to sequentially select each row of liquid crystal picture elements in said matrix to be controlled by said signal driving means, said scan driving means being adapted to apply said select voltage to a respective scan line delayed by one horizontal scanning period when said third switching means (130, 132, 134) or said fourth switching means (140, 142, 144) becomes conductive after completion of said sampling and holding of the portion of said video signal related to said respective row.

18. The device of claims 1 or 2, wherein said supply voltage control means is adapted to apply, during the vertical blanking period of said video signal, substantially the same potential to said high and low potential power supply terminals of said analog buffers.

19. The device of any one of the preceding claims, wherein said analog buffers are comprised of thin film transistors 1302-314; 322-334) and have a linear region in which the relationship between the output voltage from and the input voltage to the respective buffer is approximately linear, and wherein said supply voltage control means is adapted to control the voltages applied to said high and low potential power supply terminals so that the analog buffers are always operated substantially in said linear region.

20. The device of claim 19, wherein said analog buffers each include a differential stage (320) to which the respective input voltage to and the output voltage from the buffer are input and in which the voltage difference between the input voltage and the output voltage is amplified, and a driving stage (330) including an n-channel driving transistor (334) connected to receive the output of the differential stage at its gate electrode and to output said output voltage at its drain electrode, and wherein said supply voltage control means performs control so as to shift to the low potential side the voltages applied to said high and low potential power supply terminals so that when the amplitude of said input voltage shifts to the low potential side said amplitude is included in said linear region which is located on the high potential side.

21. The device of claim 19, wherein said analog buffers each include a differential stage (300) to which the respective input voltage to and the output voltage from the buffer are input and in which the voltage difference between the input voltage and the output voltage is amplified, and a driving stage (310) including an p-channel driving transistor (312) connected to receive the output of the differential stage at its gate electrode and to output said output voltage at its drain electrode, and wherein said supply voltage control means performs control so as to shift to the high potential side the voltages applied to said high and low potential power supply terminals so that when the amplitude of said input voltage shifts to the high potential side said amplitude is included in said linear region which is located on the low potential side.

22. The device of claim 19, 20 or 21, further comprising means for canceling said analog buffer's offset value by adjusting the value of said counter voltage.

23. A liquid crystal display device having multiple signal lines (260, 262), multiple scan lines (252-258) which intersect the signal lines, liquid crystal picture elements (268) which are arrayed in a matrix at positions defined by the intersection between said signal lines and said scan lines, and multiple thin film control transistors (266) for transmitting drive voltages to the liquid crystal picture elements, wherein said display device has said signal lines connected to said signal driving means of at least one liquid crystal driving device (200) according to any one of the preceding claims.

24. The liquid crystal display device of claim 23 including first and second liquid crystal driving devices (400, 402) according to any one of claims 1 to 22, wherein odd-numbered signal lines are connected to the first and even-numbered signal lines are connected to the second liquid crystal driving device, and wherein the supply voltage control means of said first and second liquid crystal driving devices are controlled such that the output voltage range of the analog buffers included in the first liquid crystal driving device and that of the analog buffers included in the second liquid crystal driving device are shifted in opposite directions.

25. The liquid cystal display device of claim 23 or 24 wherein the liquid crystal driving device is or the first and second liquid crystal driving devices are integrated on a liquid crystal panel on which said thin film control transistors are formed.

26. A liquid crystal display panel driving method which drives liquid crystal picture elements arrayed in a matrix by supplying a voltage to a liquid crystal element, to the other side of which is supplied a counter voltage;
which sequentially samples and holds video signals, buffers the sampled and held voltage by means of multiple analog buffers to which are supplied a high potential supply voltage and a low potential supply voltage, and selects either output of the multiple analog buffers in question; and
which, by controlling the value of the said high potential supply voltage and said low potential supply voltage supplied to the said analog buffers, shifts the range of the output voltage of the said analog buffers to either the high potential side or the low potential side, using the said counter voltage as a reference, and controls the selection of either output of the said analog buffers in which the output voltage range shifted.

27. The method of claim 26 which transmits said sampled and held voltages by first and second switching means; buffers the voltages which are transmitted via the first switching means by a first analog buffer; buffers the voltage which is transmitted via the second switching means by a second analog buffer; transmits the first analog buffer's output by a third switching means, which turns on and off in conjunction with the second switching means; and transmits the second analog buffer's output by a fourth switching means, which turns on and off in conjunction with the first switching means; and
which, by controlling the value of said high potential supply voltage and said low potential supply voltage supplied to the said first and second analog buffers, shifts the range of the output voltage of said first and second analog buffers to either the high potential side or the low potential side, using the said counter voltage as a reference, and controls the on and off operation of the said first through fourth switching means.

28. The method of claim 26 or 27 which outputs the applied voltage to a signal line by signal driving means and, where it outputs to the scan line by the scan driving means the select voltage for selecting whether or not to supply the applied voltage in question to the said liquid crystal element, when the applied voltage from the said signal driving means becomes valid sequentially delaying it by exactly one horizontal scanning period so that the said selection voltage becomes effective once the applied voltage from the said signal driving means becomes valid.

## Patentansprüche

1. Flüssigkristallsteuervorrichtung zum Ansteuern von in einer Matrix angeordneten Flüssigkristallbildelementen durch selektives Anlegen einer Spannung an eine Seite jedes Flüssigkristallbildelements, dessen anderer Seite eine Gegenspannung zugeführt wird, wobei an die Flüssigkristallbildelemente Reihe für Reihe der Matrix eine jeweilige Spannung angelegt wird, wobei eine horizontale Abtastperiode als die Zeit zum Anlegen der Spannungen an alle Flüssigkristallbildelemente in einer jeweiligen Reihe bestimmt ist und eine vertikale Abtastperiode ein einmaliges Anlegen der Spannungen an alle Flüssigkristallbildelemente der Matrix aufweist, und die Steuervorrichtung folgendes aufweist:
eine Vielzahl Signalsteuereinrichtungen, die je eine Einrichtung (100, 102, 104) zum sequentiellen Abtasten und Halten eines Videosignals, mehrere analoge Puffer (170, 172), die die Ausgabespannung der Abtast- und Halteeinrichtungen zwischenspeichern und einen Stromversorgungsanschluß für hohes Potential sowie einen Stromversorgungsanschluß für niedriges Potential haben, und Auswähleinrichtungen (110, 120, 130, 140) umfassen, die die Ausgabe irgendeines der vielen Puffer zum Anlegen an ein jeweiliges Flüssigkristallbildelement auswählen;
Zufuhrspannungssteuereinrichtungen (201, 202, 204, 230-236), zum Steuern der an die Stromversorgungsanschlüsse hohen und niedrigen Potentials der analogen Puffer angelegten Spannungen, um den Ausgangsspannungsbereich der analogen Puffer entweder nach oberhalb oder unterhalb der Gegenspannung zu verlagern; und
eine Auswählsteuereinrichtung (206) zum Steuern der Auswähleinrichtung.

2. Vorrichtung nach Anspruch 1, bei der jede Signalsteuereinrichtung folgendes aufweist:
eine erste und eine zweite Schalteinrichtung (110, 120),
einen ersten und einen zweiten analogen Puffer (170, 172) zum Zwischenspeichern der Ausgabespannung der über die erste Schalteinrichtung bzw. die zweite Schalteinrichtung übertragenen Ausgabespannung der Abtast- und Halteeinrichtung,
eine dritte Schalteinrichtung (130), die zwischen den Ausgang des ersten analogen Puffers (170) und den Ausgang der Signalsteuereinrichtung geschaltet ist, und
eine vierte Schalteinrichtung (140), die zwischen den Ausgang des zweiten analogen Puffers (172) und den Ausgang der Signalsteuereinrichtung geschaltet ist,
wobei die erste und vierte Schalteinrichtung so steuerbar sind, daß sie beide EIN oder beide AUS sind, und die dritte und zweite Schalteinrichtung so steuerbar sind, daß sie beide EIN oder beide AUS sind,
wobei die Zufuhrspannungssteuereinrichtung (201, 202, 204, 230-236) beschaffen ist, die an die Stromversorgungsanschlüsse hohen und niedrigen Potentials des ersten und zweiten analogen Puffers angelegten Spannungen zu steuern, und
wobei die Schaltsteuereinrichtung (206) zum Steuern der ersten bis vierten Schalteinrichtung vorgesehen ist.

3. Vorrichtung nach Anspruch 2, die beschaffen ist, die Umschaltrichtung des Ausgangsspannungsbereichs des ersten und zweiten analogen Puffers jede vertikale Abtastperiode zu wechseln, um dadurch eine Vollbildumkehrsteuerung durchzuführen.

4. Vorrichtung nach Anspruch 2, die beschaffen ist, die Umschaltrichtungen des Ausgangsspannungsbereichs des ersten und zweiten analogen Puffers einer jeweiligen Signalsteuereinrichtung voneinander unterschiedlich zu machen und die EIN-AUS-Folge der ersten bis vierten Schalteinrichtung jede vertikale Abtastperiode umzuschalten, um dadurch Abtastzeilenumkehrsteuerung durchzuführen.

5. Vorrichtung nach Anspruch 2, die beschaffen ist, die Umschaltrichtungen des Ausgangsspannungsbereichs des ersten und zweiten analogen Puffers einer jeweiligen Signalsteuereinrichtung voneinander unterschiedlich zu machen und diese Umschaltrichtungen jede vertikale Abtastperiode zu wechseln, um dadurch Abtastzeilenumkehrsteuerung durchzuführen.

6. Vorrichtung nach Anspruch 2, die beschaffen ist, die Umschaltrichtungen des Ausgangsspannungsbereichs des ersten und zweiten analogen Puffers einer jeweiligen Signalsteuereinrichtung gleich aber anders als die der benachbarten Signalsteuereinrichtung zu machen und die Umschaltrichtungen jede vertikale Abtastperiode zu wechseln, um dadurch Signalleitungsumkehrsteuerung durchzuführen.

7. Vorrichtung nach Anspruch 2, die beschaffen ist, für alle Signalsteuereinrichtungen die Umschaltrichtungen des Ausgangsspannungsbereichs des jeweiligen ersten und zweiten analogen Puffers unterschiedlich voneinander zu machen und die EIN-AUS-Folge der ersten bis vierten Schalteinrichtung jede vertikale Abtastperiode umzuschalten, um dadurch Punktumkehrsteuerung durchzuführen.

8. Vorrichtung nach Anspruch 2, die beschaffen ist, für alle Signalsteuereinrichtungen die Umschaltrichtungen des Ausgangsspannungsbereichs des jeweiligen ersten und zweiten analogen Puffers unterschiedlich voneinander zu machen und diese Umschaltrichtungen jede vertikale Abtastperiode zu wechseln, um dadurch Punktumkehrsteuerung durchzuführen.

9. Vorrichtung nach Anspruch 2, die beschaffen ist, für alle Signalsteuereinrichtungen die Umschaltrichtungen des Ausgangssteuerbereichs des jeweiligen ersten und zweiten analogen Puffers unterschiedlich voneinander zu machen, die EIN-AUS-Folgen der ersten bis vierten Schalteinrichtung jedes Paares einander benachbarter Signalsteuereinrichtungen unterschiedlich voneinander zu machen und die EIN-AUS-Folgen jede vertikale Abtastperiode umzuschalten, um dadurch Punktumkehrsteuerung durchzuführen.

10. Vorrichtung nach Anspruch 2, die beschaffen ist, für alle Signalsteuereinrichtungen die Umschaltrichtungen des Ausgangsspannungsbereichs des jeweiligen ersten und zweiten analogen Puffers unterschiedlich voneinander zu machen, diese Umschaltrichtungen jede vertikale Abtastperiode zu wechseln und die EIN-AUS-Folgen der ersten bis vierten Schalteinrichtung jedes Paares einander benachbarter Signalsteuereinrichtungen unterschiedlich voneinander zu machen, um dadurch Punktumkehrsteuerung durchzuführen.

11. Vorrichtung nach Anspruch 2, ferner aufweisend:
ein erstes Paar Zufuhrleitungen (V1⁺, V1⁻⁾, mit denen die Stromversorgungsanschlüsse hohen bzw. niedrigen Potentials des ersten analogen Puffers (170; 178) aller ungeradzahligen Signalsteuereinrichtungen verbunden sind;
ein zweites Paar Zufuhrleitungen (V2⁺, V2⁻), mit denen die Stromversorgungsanschlüsse hohen bzw. niedrigen Potentials des zweiten analogen Puffers (172; 180) aller ungeradzahligen Signalsteuereinrichtungen verbunden sind;
ein drittes Paar Zufuhrleitungen (V3⁺, V3⁻), mit denen die Stromversorgungsanschlüsse hohen bzw. niedrigen Potentials des ersten analogen Puffers (174) aller geradzahligen Signalsteuereinrichtungen verbunden sind;
ein viertes Paar Zufuhrleitungen (V4⁺, V4⁻), mit denen die Stromversorgungsanschlüsse hohen bzw. niedrigen Potentials des zweiten analogen Puffers (176) aller geradzahligen Signalsteuereinrichtungen verbunden sind;
eine erste Schaltersteuerleitung (L1) zum Steuern der ersten und dritten Schalteinrichtung (100, 130; 112, 132; 114; 134); und
eine zweite Schaltersteuerleitung (L2) zum Steuern der zweiten und vierten Schalteinrichtung (120, 140; 122, 142; 124, 144);
wobei die Zufuhrspannungssteuereinrichtung (201, 202, 204, 230-236) eine Einrichtung zum Steuern der Werte der Zufuhrspannungen hohen Potentials und der Zufuhrspannungen niedrigen Potentials umfaßt, die dem ersten bis vierten Paar Zufuhrleitungen zugeführt werden, und die Schaltsteuereinrichtung (206) eine Einrichtung zum Steuern der den ersten und zweiten Schaltersteuerleitungen zugeführten Schaltsignale umfaßt.

12. Vorrichtung nach Anspruch 2, ferner aufweisend:
ein Paar Zufuhrleitungen (V⁺, V⁻), mit denen die Stromversorgungsanschlüsse hohen bzw. niedrigen Potentials des ersten und zweiten analogen Puffers (170-180) der Signalsteuereinrichtung verbunden sind;
eine erste Schaltersteuerleitung (L1) zum Steuern der ersten und dritten Schalteinrichtung (110, 112, 114, 130, 132, 134); und
eine zweite Schaltersteuerleitung (L2) zum Steuern der zweiten und vierten Schalteinrichtung (120, 122, 124, 140, 142, 144);
wobei die Zufuhrspannungssteuereinrichtung eine Einrichtung zum Steuern der Werte der Zufuhrspannung hohen Potentials und der Zufuhrspannung niedrigen Potentials umfaßt, die dem Paar Zufuhrleitungen zugeführt werden, und die Schaltsteuereinrichtung eine Einrichtung zum Steuern von Schaltsignalen umfaßt, die der ersten und zweiten Schaltersteuerleitung zugeführt werden.

13. Vorrichtung nach Anspruch 2, ferner aufweisend:
ein erstes Paar Zufuhrleitungen (V_{ungerade}⁺, V_{ungerade}⁻), mit der die Stromversorgungsanschlüsse hohen bzw, niedrigen Potentials des ersten analogen Puffers (170, 174, 178) der Signalsteuereinrichtung verbunden sind;
ein zweites Paar Zufuhrleitungen (V_{gerade}⁺, V_{gerade}⁻), mit denen die Stromversorgungsanschlüsse hohen bzw. niedrigen Potentials des zweiten analogen Puffers (172, 176, 180) der Signalsteuereinrichtung verbunden sind;
eine erste Schaltersteuerleitung (L1) zum Steuern der ersten und dritten Schalteinrichtung (110, 112, 114, 130, 132, 134); und
eine zweite Schaltersteuerleitung (L2) zum Steuern der zweiten und vierten Schalteinrichtung (120, 122, 124, 140, 142, 144);
wobei die Zufuhrspannungssteuereinrichtung eine Einrichtung zum Steuern der Werte der Zufuhrspannungen hohen Potentials und der Zufuhrspannungen niedrigen Potentials umfaßt, die dem ersten und zweiten Paar Zufuhrleitungen zugeführt werden, und die Schaltsteuereinrichtung eine Einrichtung umfaßt, um Schaltsignale zu steuern, die der ersten und zweiten Schaltersteuerleitung zugeführt werden.

14. Vorrichtung nach Anspruch 2, ferner aufweisend:
ein erstes Paar Zufuhrleitungen (V₁₂⁺, V₁₂⁻), mit denen die Stromversorgungsanschlüsse hohen Potentials bzw. niedrigen Potentials des ersten und zweiten analogen Puffers (170, 172, 178, 180) der ungeradzahligen Signalsteuereinrichtung verbunden sind;
ein zweites Paar Zufuhrleitungen (V₃₄⁺, V₃₄⁻), mit denen die Stromversorgungsanschlüsse hohen bzw. niedrigen Potentials des ersten und zweiten analogen Puffers (174, 176) der geradzahligen Signalsteuereinrichtungen verbunden sind;
eine erste Schaltersteuerleitung (L1) zum Steuern der ersten und dritten Schalteinrichtung (110, 112, 114, 130, 132, 134); und
eine zweite Schaltersteuerleitung (L2) zum Steuern der zweiten und vierten Schalteinrichtung (120, 122, 124, 140, 142, 144);
wobei die Zufuhrspannungssteuereinrichtung eine Einrichtung zum Steuern der Werte der Zufuhrspannungen hohen Potentials und der Zufuhrspannung niedrigen Potentials umfaßt, die dem ersten und zweiten Paar Zufuhrleitungen zugeführt werden, und die Schaltsteuereinrichtung eine Einrichtung umfaßt, um Schaltsignale zu steuern, die an die erste und zweite Schaltersteuerleitung angelegt werden.

15. Vorrichtung nach Anspruch 2, ferner aufweisend:
ein erstes Paar Zufuhrleitungen (V_{ungerade}⁺, V_{ungerade}⁻), mit denen die Stromversorgungsanschlüsse hohen bzw. niedrigen Potentials des ersten analogen Puffers (170, 174, 178) der Signalsteuereinrichtung verbunden sind;
ein zweites Paar Zufuhrleitungen (V_{gerade}⁺, V_{gerade}⁻), mit denen die Stromversorgungsanschlüsse hohen bzw. niedrigen Potentials des zweiten analogen Puffers (172, 176, 180) der Signalsteuereinrichtung verbunden sind;
eine erste Schaltersteuerleitung (L1) zum Steuern der ersten und dritten Schalteinrichtung (110, 130, 114, 134) der ungeradzahligen Signalsteuereinrichtung und der zweiten und vierten Schalteinrichtung (122, 142) der geradzahligen Signalsteuereinrichtung; und
eine zweite Schaltersteuerleitung (L2) zum Steuern der ersten und dritten Schalteinrichtung (112, 132) der geradzahligen Steuereinrichtung sowie der zweiten und vierten Schalteinrichtung (120, 140, 124, 144) der ungeradzahligen Signalsteuereinrichtung;
wobei die Zufuhrspannungssteuereinrichtung eine Einrichtung zum Steuern der Werte der Zufuhrspannungen hohen Potentials und der Zufuhrspannungen niedrigen Potentials umfaßt, die dem ersten und zweiten Paar Zufuhrleitungen zugeführt werden, und die Schaltsteuereinrichtung eine Einrichtung zum Steuern der Schaltsignale umfaßt, die der ersten und zweiten Schaltersteuerleitung zugeführt werden.

16. Vorrichtung nach Anspruch 2, ferner aufweisend:
ein erstes Paar Zufuhrleitungen (V_{ungerade}⁺, V_{ungerade}⁻), mit denen die Stromversorgungsanschlüsse hohen bzw. niedrigen Potentials des ersten analogen Puffers (170, 174, 178) der Signalsteuereinrichtung verbunden sind;
ein zweites Paar Zufuhrleitungen (V_{gerade}⁺, V_{gerade}⁻), mit denen die Stromversorgungsanschlüsse hohen bzw. niedrigen Potentials des zweiten analogen Puffers (172, 176, 180) der Signalsteuereinrichtung verbunden sind;
eine erste Schaltersteuerleitung (L1) zum Steuern der ersten und dritten Schalteinrichtung (110, 130, 114, 134), der ungeradzahligen Signalsteuereinrichtung;
eine zweite Schaltersteuerleitung (L2) zum Steuern der zweiten und vierten Schalteinrichtung (120, 140, 124, 144) der ungeradzahligen Signalsteuereinrichtung; und
eine dritte Schaltersteuerleitung (L3) zum Steuern der ersten und dritten Schalteinrichtung (112, 132) der geradzahligen Signalsteuereinrichtung; und
eine vierte Schaltersteuerleitung (L4) zum Steuern der zweiten und vierten Schalteinrichtung (122, 142) der geradzahligen Signalsteuereinrichtung;
wobei die Zufuhrspannungssteuereinrichtung eine Einrichtung zum Steuern der Werte der Zufuhrspannungen hohen Potentials und der Zufuhrspannungen niedrigen Potentials umfaßt, die den ersten und zweiten Paaren Zufuhrleitungen zugeführt werden, und die Schaltsteuereinrichtung eine Einrichtung zum Steuern von Schaltsignalen umfaßt, die der ersten bis vierten Schaltersteuerleitung zugeführt werden.

17. Vorrichtung nach Anspruch 2, bei der die Matrix aus Flüssigkristallbildelementen eine Vielzahl Signalleitungen (260, 262) und eine Vielzahl Abtastleitungen (252-258) umfaßt, wobei die Signalsteuereinrichtungen mit den Signalleitungen verbunden und Abtaststeuereinrichtungen (242) vorgesehen sind, um in aufeinanderfolgenden horizontalen Abtastperioden (1H) selektiv eine Auswählspannung an eine entsprechende der Abtastleitungen anzulegen, um nacheinander jede Reihe der Flüssigkristallbildelemente in der Matrix zwecks Steuerung durch die Signalsteuereinrichtung auszuwählen, wobei die Abtaststeuereinrichtung beschaffen ist, die Auswählspannung an eine jeweilige Abtastleitung um eine horizontale Abtastperiode verzögert anzulegen, wenn die dritte Schalteinrichtung (130, 132, 134) oder die vierte Schalteinrichtung (140, 142, 144) leitend wird, nachdem das Abtasten und Halten des mit der jeweiligen Reihe in Beziehung stehenden Teils des Videosignals vollendet ist.

18. Vorrichtung nach Anspruch 1 oder 2, bei der die Zufuhrspannungssteuereinrichtung beschaffen ist, während der vertikalen Austastperiode des Videosignals im wesentlichen das gleiche Potential an die Stromversorgungsanschlüsse hohen Potentials und niedrigen Potentials der analogen Puffer anzulegen.

19. Vorrichtung nach einem der vorhergehenden Ansprüche, bei der die analogen Puffer Dünnschichttransistoren (302-314; 322-334) aufweisen und eine lineare Region haben, in der die Beziehung zwischen der Ausgangsspannung und der Eingangsspannung des jeweiligen Puffers etwa linear ist, und bei der die Zufuhrspannungssteuereinrichtung beschaffen ist, die an die Stromversorgungsanschlüsse hohen Potentials und niedrigen Potentials angelegten Spannungen so zu steuern, daß die analogen Puffer immer im wesentlichen in der linearen Region betrieben werden.

20. Vorrichtung nach Anspruch 19, bei der die analogen Puffer je eine Differentialstufe (320), in die die jeweilige Eingangsspannung und Ausgangsspannung des Puffers eingegeben werden, und in der die Spannungsdifferenz zwischen der Eingangsspannung und der Ausgangsspannung verstärkt wird, sowie eine Treiberstufe (330) umfassen, die einen n-Kanaltreibertransistor (334) einschließt, der so angeschlossen ist, daß er die Ausgabe der Differentialstufe an seiner Gate-Elektrode empfängt und die Ausgangsspannung an seiner Drain-Elektrode ausgibt, und bei der die Zufuhrspannungssteuereinrichtung so steuert, daß die an die Stromversorgungsanschlüsse hohen und niedrigen Potentials angelegten Spannungen zur Niedrigpotentialseite verschoben werden, so daß beim Verschieben der Amplitude der Eingabespannung zur Niedrigpotentialseite die Amplitude in die lineare Region eingeschlossen wird, die sich an der Hochpotentialseite befindet.

21. Vorrichtung nach Anspruch 19, bei der die analogen Puffer je eine Differentialstufe (300), in die die jeweilige Eingangsspannung und Ausgangsspannung des Puffers eingegeben und in der die Spannungsdifferenz zwischen der Eingangsspannung und der Ausgangsspannung verstärkt wird, sowie eine Treiberstufe (310) umfassen, die einen P-Kanal Treibertransistor (312) einschließt, der so angeschlossen ist, daß er die Ausgabe der Differentialstufe an seiner Gate-Elektrode empfängt und die Ausgabespannung an seiner Drain-Elektrode ausgibt, und bei der die Zufuhrspannungssteuereinrichtung so steuert, daß sie die an die Stromversorgungsanschlüsse hohen und niedrigen Potentials angelegten Spannungen zur Hochpotentialseite verschiebt, so daß bei der Verschiebung der Eingangsspannung zur Hochpotentialseite die Amplitude in den linearen Bereich eingeschlossen wird, der sich an der Niedrigpotentialseite befindet.

22. Vorrichtung nach Anspruch 19, 20 oder 21, ferner mit Einrichtungen zum Aufheben des Versatzwertes des analogen Puffers durch Einstellen des Wertes der Gegenspannung.

23. Flüssigkristallanzeigevorrichtung mit mehreren Signalleitungen (260, 262), mehreren Abtastleitungen (252-258), welche die Signalleitungen kreuzen, Flüssigkristallbildelementen (268), die in einer Matrix an Positionen angeordnet sind, welche durch die Kreuzungen zwischen den Signalleitungen und den Abtastleitungen bestimmt sind, und mehreren Dünnschichtsteuertransistoren (266), welche Ansteuerspannungen zu den Flüssigkristallbildelementen übertragen, wobei in der Anzeigevorrichtung die Signalleitungen mit den Signalsteuereinrichtungen mindestens einer Flüssigkristallsteuervorrichtung (200) nach einem der vorhergehenden Ansprüche verbunden sind.

24. Flüssigkristallanzeigevorrichtung nach Anspruch 23 mit einer ersten und zweiten Flüssigkristallsteuervorrichtung (400, 402) nach einem der Ansprüche 1 bis 22, bei der ungeradzahlige Signalleitungen mit der ersten Flüssigkristallsteuervorrichtung und geradzahlige Signalleitungen mit der zweiten Flüssigkristallsteuervorrichtung verbunden sind, und bei der die Zufuhrspannungssteuereinrichtungen der ersten und zweiten Flüssigkristallsteuervorrichtung so gesteuert sind, daß der Ausgangsspannungsbereich der von der ersten Flüssigkristallsteuervorrichtung umfaßten analogen Puffer und der von der zweiten Flüssigkristallsteuervorrichtung umfaßten analogen Puffer in entgegengesetzte Richtungen umgeschaltet wird.

25. Flüssigkristallanzeigevorrichtung nach Anspruch 23 oder 24, bei der die Flüssigkristallsteuervorrichtung oder die erste und zweite Flüssigkristallsteuervorrichtung auf einem Flüssigkristallfeld integriert ist/sind, auf dem Dünnschichtsteuertransistoren gebildet sind.

26. Flüssigkristallanzeigefeld-Ansteuerverfahren, welches in einer Matrix angeordnete Flüssigkristallbildelemente durch Zufuhr einer Spannung zu einem Flüssigkristallelement ansteuert, dessen anderer Seite eine Gegenspannung zugeführt wird;
welches nacheinander Videosignale abtastet und hält, die abgetastete und gehaltene Spannung mittels mehrerer analoger Puffer zwischenspeichert, denen eine Zufuhrspannung hohen Potentials und eine Zufuhrspannung niedrigen Potentials zugeführt wird, und die eine oder andere Ausgabe der mehreren in Frage stehenden analogen Puffer auswählt; und
welches durch Steuern des Wertes der Zufuhrspannung hohen Potentials und der Zufuhrspannung niedrigen Potentials, die den anlogen Puffern zugeführt werden, den Ausgangsspannungsbereich der analogen Puffer entweder zur Hochpotentialseite oder zur Niedrigpotentialseite verschiebt, wobei die Gegenspannung als Bezugsgröße verwendet wird, und die Auswahl der einen oder anderen Ausgabe der analogen Puffer, in denen der Ausgangsspannungsbereich verschoben wird, steuert.

27. Verfahren nach Anspruch 26, welches die abgetasteten und gehaltenen Spannungen mittels erster und zweiter Schalteinrichtungen überträgt; die über die Schalteinrichtung übertragenen Spannungen mittels eines ersten analogen Puffers zwischenspeichert, die mit der zweiten Schalteinrichtung übertragene Spannung mittels eines zweiten analogen Puffers zwischenspeichert, die Ausgabe des ersten analogen Puffers mittels einer dritten Schalteinrichtung überträgt, die sich gemeinsam mit der zweiten Schalteinrichtung ein- und ausschaltet; und die Ausgabe des zweiten analogen Puffers mittels einer vierten Schalteinrichtung überträgt, die sich zusammen mit der ersten Schalteinrichtung ein- und ausschaltet; und
welches durch Steuern des Wertes der Zufuhrspannung hohen Potentials und der Zufuhrspannung niedrigen Potentials, die dem ersten und zweiten analogen Puffer zugeführt werden, den Ausgangsspannungsbereich des ersten und zweiten analogen Puffers entweder zur Hochpotentialseite oder zur Niedrigpotentialseite verschiebt, wobei die Gegenspannung als Bezugsgröße benutzt wird, und den EIN- und AUS-Betrieb der ersten bis vierten Schalteinrichtung steuert.

28. Verfahren nach Anspruch 26 oder 27, welches die angelegte Spannung mittels einer Signalsteuereinrichtung an eine Signalleitung ausgibt und wo es mit der Abtaststeuereinrichtung an die Abtastleitung die Auswählspannung ausgibt, um auszuwählen, ob die fragliche, angelegte Spannung an das Flüssigkristallelement geliefert werden soll, wenn die angelegte Spannung von der Signalsteuereinrichtung gültig wird, diese nacheinander um genau eine horizontale Abtastperiode verzögert, so daß die Auswählspannung wirksam wird, sobald die angelegte Spannung von der Signalsteuereinrichtung gültig wird.

## Revendications

1. Dispositif d'excitation de cristaux liquides pour exciter des éléments d'image à cristaux liquides, disposés en une matrice, en appliquant de façon sélective une tension d'un côté de chaque élément d'image à cristaux liquides, dont l'autre côté est alimenté en une contre-tension, une tension respective étant appliquée aux éléments d'image à cristaux liquides, rangée par rangée de la matrice, dans lequel une période de balayage horizontal est définie en tant que temps pour appliquer les tensions à tous les éléments d'image à cristaux liquides d'une rangée respective, et une période de balayage vertical comprend le fait d'appliquer une fois les tensions à tous les éléments d'image à cristaux liquides de la matrice, le dispositif d'excitation comprenant :
une pluralité de moyens d'excitation de signaux, comprenant chacun un moyen (100, 102, 104) pour échantillonner et bloquer séquentiellement un signal vidéo, des mémoires (170, 172) tampon analogiques multiples pour mettre en mémoire tampon la tension de sortie du moyen échantillonneur bloqueur, les mémoires tampon ayant une borne d'alimentation à haut potentiel et une borne d'alimentation à bas potentiel, ainsi que des moyens (110, 120, 130, 140) de sélection destinés à sélectionner la sortie à partir de l'une quelconque des mémoires tampon multiples pour l'application à un élément d'image à cristaux liquides respectif ;
des moyens (201, 202, 204, 230 à 236) de commande de tension destinés à commander les tensions appliquées aux bornes d'alimentation à potentiel haut et bas des mémoires tampon analogiques, de manière à décaler la plage de la tension de sortie des mémoires tampon analogiques soit au-dessus, soit au-dessous de la contre-tension ; et
un moyen (206) de commande de sélection destiné à commander le moyen de sélection.

2. Dispositif suivant la revendication 1, dans lequel chaque moyen d'excitation de signaux comprend :
des premier et deuxième moyens (110, 120) de commutation,
des première et deuxième mémoires (170, 172) tampon analogiques pour mettre en mémoire tampon la tension de sortie du moyen échantillonneur bloqueur, émise via le premier moyen de commutation et le deuxième moyen de commutation, respectivement,
un troisième moyen (130) de commutation qui est monté entre la sortie de la première mémoire (170) tampon analogique et la sortie du moyen d'excitation de signaux, et
un quatrième moyen (140) de commutation qui est monté entre la sortie de la deuxième mémoire (172) tampon analogique et la sortie du moyen d'excitation de signaux,
les premier et quatrième moyens de commutation pouvant être commandés pour être tous deux sous tension ou tous deux hors tension et les troisième et deuxième moyens de commutation pouvant être commandés pour être tous deux sous tension ou tous deux hors tension ;
dans lequel le moyen (201, 202, 204, 230 à 236) de commande de tension d'alimentation est conçu pour commander les tensions appliquées aux bornes d'alimentation à potentiel haut et bas des première et deuxième mémoires tampon analogiques ; et
dans lequel le moyen (206) de commande de commutation est prévu pour commander les premier à quatrième moyens de commutation.

3. Dispositif suivant la revendication 2, conçu pour commuter la direction de décalage de la plage de tension de sortie des première et deuxième mémoires tampon analogiques à chaque période de balayage, de manière à obtenir une excitation par inversion de trames.

4. Dispositif suivant la revendication 2, conçu pour rendre les directions de décalage de la plage de tension de sortie des première et deuxième mémoires tampon analogiques d'un moyen d'excitation de signaux respectif, différentes l'une de l'autre et pour commuter la séquence marche/arrêt des premier à quatrième moyens de commutation à chaque période de balayage vertical, de manière à obtenir une excitation par inversion de lignes de balayage.

5. Dispositif suivant la revendication 2, conçu pour rendre les directions de décalage de la plage de tension de sortie des première et deuxième mémoires tampon analogiques d'un moyen d'excitation de signaux respectif, différentes l'une de l'autre et pour commuter ces directions de décalage à chaque période de balayage vertical, de manière à obtenir une excitation par inversion de lignes de balayage.

6. Dispositif suivant la revendication 2, conçu pour rendre les directions de décalage de la plage de tension de sortie des première et deuxième mémoires tampon analogiques d'un moyen d'excitation de signaux respectif, identiques mais différentes de celle du moyen d'excitation de signaux adjacent, et pour commuter les directions de décalage à chaque période de balayage vertical, de manière à obtenir une excitation par inversion de lignes de signaux.

7. Dispositif suivant la revendication 2, conçu pour rendre, pour tous les moyens d'excitation de signaux, les directions de décalage de la plage de tension de sortie des première et deuxième mémoires tampon analogiques respectives, différentes l'une de l'autre et pour commuter la séquence marche/arrêt des premier à quatrième moyens de commutation à chaque période de balayage vertical, de manière à obtenir une excitation par inversion de points.

8. Dispositif suivant la revendication 2, conçu pour rendre, pour tous les moyens d'excitation de signaux, les directions de décalage de la plage de tension de sortie des première et deuxième mémoires tampon analogiques respectives, différentes l'une de l'autre et pour commuter ces directions de décalage à chaque période de balayage vertical, de manière à obtenir une excitation par inversion de points.

9. Dispositif suivant la revendication 2, conçu pour rendre, pour tous les moyens d'excitation de signaux, les directions de décalage de la plage de tension de sortie des première et deuxième mémoires tampon analogiques respectives, différentes l'une de l'autre, pour rendre les séquences marche/arrêt des premier à quatrième moyens de commutation de chaque paire de moyens d'excitation de signaux adjacents, différentes l'une de l'autre et pour commuter les séquences marche/arrêt à chaque période de balayage vertical, de manière à obtenir une excitation par inversion de points.

10. Dispositif suivant la revendication 2, conçu pour rendre, pour tous les moyens d'excitation de signaux, les directions de décalage de la plage de tension de sortie des première et deuxième mémoires tampon analogiques respectives, différentes l'une de l'autre, pour commuter ces directions de décalage à chaque période de balayage vertical et pour rendre les séquences marche/arrêt des premier à quatrième moyens de commutation de chaque paire de moyens d'excitation de signaux adjacents, différentes l'une de l'autre, de manière à obtenir une excitation par inversion de points.

11. Dispositif suivant la revendication 2, comprenant, en outre :
une première paire de lignes d'alimentation (V1⁺, V1⁻) auxquelles les bornes d'alimentation à potentiel haut et bas, respectivement, de la première mémoire (170 ; 178) tampon analogique de tous les moyens d'excitation de signaux à numéro impair sont connectées ;
une deuxième paire de lignes d'alimentation (V2⁺, V2⁻) auxquelles les bornes d'alimentation à potentiel haut et bas, respectivement, de la deuxième mémoire (172 ; 180) tampon analogique de tous les moyens d'excitation de signaux à numéro impair sont connectées ;
une troisième paire de lignes d'alimentation (V3⁺, V3⁻) auxquelles les bornes d'alimentation à potentiel haut et bas, respectivement, de la première mémoire (174) tampon analogique de tous les moyens d'excitation de signaux à numéro pair sont connectées ;
une quatrième paire de lignes d'alimentation (V4⁺, V4⁻) auxquelles les bornes d'alimentation à potentiel haut et bas, respectivement, de la deuxième mémoire (176) tampon analogique de tous les moyens d'excitation de signaux à numéro pair sont connectées ;
une première ligne (L1 ) de commande de commutation pour commander les premier et troisième moyens (100, 130 ; 112, 132 ; 114, 134) de commutation ; et
une deuxième ligne (L2) de commande de commutation pour commander les deuxième et quatrième moyens (120, 140 ; 122, 142 ; 124, 144) de commutation ;
dans lequel le moyen (201, 202, 204, 230 à 236) de commande de tension d'alimentation comprend un moyen destiné à commander les valeurs des tensions d'alimentation à haut potentiel et des tensions d'alimentation à bas potentiel, qui sont fournies aux première à quatrième paires de lignes d'alimentation, et le moyen (206) de commande de commutation comprend un moyen pour commander des signaux de commutation qui sont fournis aux première et deuxième lignes de commande de commutation.

12. Dispositif suivant la revendication 2, comprenant, en outre :
une paire de lignes d'alimentation (V⁺, V⁻) auxquelles les bornes d'alimentation à potentiel haut et bas respectivement, des première et deuxième mémoires (170 à 180) tampon analogiques du moyen d'excitation de signaux sont connectées ;
une première ligne (L1) de commande de commutation pour commander les premier et troisième moyens (110, 112, 114, 130, 132, 134) de commutation ; et
une deuxième ligne (L2) de commande de commutation pour commander les deuxième et quatrième moyens (120, 122, 124, 140, 142, 144) de commutation ;
dans lequel le moyen de commande de tension d'alimentation comprend un moyen pour commander les valeurs de la tension d'alimentation à haut potentiel et de la tension d'alimentation à bas potentiel qui sont fournies à la paire de lignes d'alimentation, et le moyen de commande de commutation comprend un moyen pour commander des signaux de commutation qui sont fournis aux première et deuxième lignes de commande de commutation.

13. Dispositif suivant la revendication 2 comprenant, en outre :
une première paire de lignes d'alimentation (V_{odd}⁺, V_{odd}⁻) auxquelles les bornes d'alimentation à potentiel haut et bas, respectivement, de la première mémoire (170, 174, 178) tampon analogique du moyen d'excitation de signaux sont connectées ;
une deuxième paire de lignes d'alimentation (Vₑᵥₑₙ⁺, Vₑᵥₑₙ⁻) auxquelles les bornes d'alimentation à potentiel haut et bas, respectivement, de la deuxième mémoire (172, 176, 180) tampon analogique du moyen d'excitation de signaux sont connectées ;
une première ligne (L1) de commande de commutation pour commander les premier et troisième moyens (110, 112, 114, 130, 132, 134) de commutation ; et
une deuxième ligne (L2) de commande de commutation pour commander les deuxième et quatrième moyens (120, 122, 124, 140, 142, 144) de commutation ;
dans lequel le moyen de commande de tension d'alimentation comprend un moyen destiné à commander les valeurs des tensions d'alimentation à potentiel haut et des tensions d'alimentation à potentiel bas qui sont fournies aux première et deuxième paires de lignes d'alimentation, et le moyen de commande de commutation comprend un moyen destiné à commander des signaux de commutation qui sont fournis aux première et deuxième lignes de commande de commutation.

14. Dispositif suivant la revendication 2 comprenant, en outre :
une première paire de lignes d'alimentation (V₁₂⁺, V₁₂⁻) auxquelles les bornes d'alimentation à potentiel haut et bas, respectivement, des première et deuxième mémoires (170, 172, 178, 180) tampon analogiques du moyen d'excitation de signaux à numéro impair sont connectées ;
une deuxième paire de lignes d'alimentation (V₃₄⁺, V₃₄⁻) auxquelles les bornes d'alimentation à potentiel haut et bas, respectivement, des première et deuxième mémoires (174, 176) tampon analogiques du moyen d'excitation de signaux à numéro pair sont connectées ;
une première ligne (L1) de commande de commutation pour commander les premier et troisième moyens (110, 112, 114, 130, 132, 134) de commutation ; et
une deuxième ligne (L2) de commande de commutation pour commander les deuxième et quatrième moyens (120, 122, 124, 140, 142, 144) de commutation ;
dans lequel le moyen de commande de tension d'alimentation comprend un moyen destiné à commander les valeurs des tensions d'alimentation à potentiel haut et des tensions d'alimentation à potentiel bas qui sont fournies aux première et deuxième paires de lignes d'alimentation, et le moyen de commande de commutation comprend un moyen pour commander des signaux de commutation qui sont fournis aux première et deuxième lignes de commande de commutation.

15. Dispositif suivant la revendication 2 comprenant, en outre :
une première paire de lignes d'alimentation (V_{odd}⁺, V_{odd}⁻) auxquelles les bornes d'alimentation à potentiel haut et bas, respectivement, de la première mémoire (170, 174, 178) tampon analogique du moyen d'excitation de signaux sont connectées ;
une deuxième paire de lignes d'alimentation (Vₑᵥₑₙ⁺. Vₑᵥₑₙ⁻) auxquelles les bornes d'alimentation à potentiel haut et bas, respectivement, de la deuxième mémoire (172, 176, 180) tampon analogique du moyen d'excitation de signaux sont connectées ;
une première ligne (L1) de commande de commutation pour commander les premier et troisième moyens (110, 130, 114, 134) de commutation du moyen d'excitation de signaux à numéro impair et les deuxième et quatrième moyens (122, 142) de commutation du moyen d'excitation de signaux à numéro pair ; et
une deuxième ligne (L2) de commande de commutation pour commander les premier et troisième moyens (112, 132) de commutation du moyen d'excitation de signaux à numéro pair et les deuxième et quatrième moyens (120, 140, 124, 144) de commutation du moyen d'excitation de signaux à numéro impair ;
dans lequel le moyen de commande de tension d'alimentation comprend un moyen pour commander les valeurs des tensions d'alimentation à potentiel haut et des tensions d'alimentation à potentiel bas qui sont fournies aux première et deuxième paires de lignes d'alimentation, et le moyen de commande de commutation comprend un moyen destiné à commander des signaux de commutation qui sont fournis aux première et deuxième lignes de commande de commutation.

16. Dispositif suivant la revendication 2 comprenant, en outre :
une première paire de lignes d'alimentation (V_{odd}⁺ V_{odd}⁻) auxquelles les bornes d'alimentation à potentiel haut et bas, respectivement, de la première mémoire (170, 174, 178) tampon analogique du moyen d'excitation de signaux sont connectées ;
une deuxième paire de lignes d'alimentation (Vₑᵥₑₙ⁺, Vₑᵥₑₙ⁻) auxquelles les bornes d'alimentation à potentiel haut et bas, respectivement, de la deuxième mémoire (172, 176, 180) tampon analogique du moyen d'excitation de signaux sont connectées ;
une première ligne (L1) de commande de commutation pour commander les premier et troisième moyens (110, 130, 114, 134) de commutation du moyen d'excitation de signaux à numéro impair ;
une deuxième ligne (L2) de commande de commutation pour commander les deuxième et quatrième moyens (120, 140, 124, 144) de commutation du moyen d'excitation de signaux à numéro impair ;
une troisième ligne (L3) de commande de commutation pour commander les premier et troisième moyens (112, 132) de commutation du moyen d'excitation de signaux à numéro pair ; et
une quatrième ligne (L4) de commande de commutation pour commander les deuxième et quatrième moyens (122, 142) de commutation du moyen d'excitation de signaux à numéro pair ;
dans lequel le moyen de commande de tension d'alimentation comprend un moyen destiné à commander les valeurs des tensions d'alimentation à potentiel haut et des tensions d'alimentation à potentiel bas qui sont fournies aux première et deuxième paires de lignes d'alimentation, et le moyen de commande de commutation comprend un moyen destiné à commander des signaux de commutation qui sont fournis aux première à quatrième lignes de commande de commutation.

17. Dispositif suivant la revendication 2, dans lequel la matrice d'éléments d'image à cristaux liquides comprend une pluralité de lignes (260, 262) de signaux et une pluralité de lignes (252 à 258) de balayage, chaque moyen d'excitation de signaux étant connecté aux lignes de signaux et un moyen (242) d'excitation de balayage étant prévu pour appliquer de façon sélective, lors de périodes (1H) successives de balayage horizontal, une tension de sélection à l'une respective des lignes de balayage, afin de sélectionner séquentiellement chaque rangée d'éléments d'image à cristaux liquides de la matrice devant être commandée par le moyen d'excitation de signaux, le moyen d'excitation de balayage étant conçu pour appliquer la tension de sélection à une ligne de balayage respective et le moyen d'excitation de balayage étant conçu pour appliquer la tension de sélection à une ligne de balayage respective retardée d'une période de balayage horizontal, lorsque le troisième moyen (130, 132, 134) de commutation ou le quatrième moyen (140, 142, 144) de commutation devient conducteur, après achèvement de l'échantillonnage et du blocage de la partie du signal vidéo relative à la rangée respective.

18. Dispositif suivant la revendication 1 ou 2, dans lequel le moyen de commande de tension d'alimentation est conçu pour appliquer, pendant la période de suppression verticale du signal vidéo, sensiblement le même potentiel aux bornes d'alimentation à potentiel haut et bas des mémoires tampon analogiques.

19. Dispositif suivant l'une quelconque des revendications précédentes, dans lequel les mémoires tampon analogiques comprennent des transistors (302 à 314, 322 à 334) à couches minces et ont une zone linéaire dans laquelle la relation entre la tension de sortie provenant de et la tension d'entrée appliquée à la mémoire tampon respective est sensiblement linéaire, et dans lequel le moyen de commande de tension d'alimentation est conçu pour commander les tensions appliquées aux bornes d'alimentation à potentiel haut et bas, de manière à ce que les mémoires tampon analogiques fonctionnent toujours sensiblement dans la zone linéaire.

20. Dispositif suivant la revendication 19, dans lequel les mémoires tampon analogiques comprennent chacune un étage (320) différentiel auquel les tensions respectives d'entrée appliquées à et de sortie provenant de la mémoire tampon sont appliquées, et dans lequel la différence de tension entre la tension d'entrée et la tension de sortie est amplifiée, et un étage (330) d'excitation comprenant un transistor (334) d'excitation à canal N monté pour recevoir la sortie de l'étage différentiel au niveau de son électrode grille et pour émettre en sortie la tension de sortie au niveau de son électrode drain, et dans lequel le moyen de commande de tension d'alimentation exécute une commande de manière à décaler vers le côté à bas potentiel les tensions appliquées aux bornes d'alimentation à potentiel haut et bas, de sorte que lorsque l'amplitude de la tension d'entrée se décale vers le côté à bas potentiel, l'amplitude est comprise dans la zone linéaire qui se situe du côté à haut potentiel.

21. Dispositif suivant la revendication 19, dans lequel les mémoires tampon analogiques comprennent chacune un étage (300) différentiel auquel la tension d'entrée respective appliquée à et la tension de sortie respective provenant de la mémoire tampon sont appliquées et dans lequel la différence de tension entre la tension d'entrée et la tension de sortie est amplifiée, et un étage (310) d'excitation comprenant un transistor (312) d'excitation à canal P monté pour recevoir la sortie de l'étage différentiel au niveau de son électrode grille et pour émettre en sortie la tension de sortie au niveau de son électrode drain, et dans lequel le moyen de commande de tension d'alimentation exécute une commande de manière à décaler vers le côté à haut potentiel les tensions appliquées aux bornes d'alimentation à potentiel haut et bas, de sorte que lorsque l'amplitude de la tension d'entrée se décale vers le côté à haut potentiel, l'amplitude est comprise dans la zone linéaire qui se situe du côté à bas potentiel.

22. Dispositif suivant les revendications 19, 20 ou 21, comprenant en outre, un moyen pour annuler la valeur de décalage de la mémoire tampon analogique, en réglant la valeur de la contre-tension.

23. Dispositif d'affichage à cristaux liquides ayant des lignes (260, 262) multiples de signaux, des lignes (252 à 258) multiples de balayage qui croisent les lignes de signaux, des éléments (268) d'image à cristaux liquides qui sont disposés en une matrice à des positions définies par l'intersection entre les lignes de signaux et les lignes de balayage, et de multiples transistors (266) de commande à couches minces pour émettre des tensions d'excitation vers les éléments d'image à cristaux liquides, dans lequel les lignes de signaux du dispositif d'affichage sont connectées au moyen d'excitation de signaux d'au moins un dispositif (200) d'excitation de cristaux liquides, suivant l'une quelconque des revendications précédentes.

24. Dispositif d'affichage à cristaux liquides, suivant la revendication 23 comprenant des premier et deuxième dispositifs (400, 402) d'excitation de cristaux liquides, suivant l'une quelconque des revendications 1 à 22, dans lequel des lignes de signaux à numéro impair sont connectées au premier dispositif d'excitation de cristaux liquides et des lignes de signaux à numéro pair sont connectées au deuxième dispositif d'excitation de cristaux liquides, et dans lequel les moyens de commande de tension d'alimentation des premier et deuxième dispositifs d'excitation de cristaux liquides sont commandés de telle sorte que la plage de tension de sortie des mémoires tampon analogiques comprises dans le premier dispositif d'excitation de cristaux liquides et celle des mémoires tampon analogiques comprises dans le deuxième dispositif d'excitation de cristaux liquides sont décalées dans des directions opposées.

25. Dispositif d'affichage à cristaux liquides suivant la revendication 23 ou 24, dans lequel le dispositif d'excitation de cristaux liquides ou les premier et deuxième dispositifs d'excitation de cristaux liquides est/sont intégré(s) à un panneau à cristaux liquides sur lequel les transistors de commande à couches minces sont formés.

26. Procédé d'excitation de panneau d'affichage à cristaux liquides qui consiste à :
exciter des éléments d'image à cristaux liquides, disposés en une matrice, en fournissant une tension à un élément à cristaux liquides, de l'autre côté duquel une contre-tension est fournie ;
échantillonner et bloquer séquentiellement des signaux vidéo ;
mettre en mémoire tampon la tension échantillonnée et bloquée au moyen de multiples mémoires tampon analogiques qui sont alimentées en une tension d'alimentation à haut potentiel et en une tension d'alimentation à bas potentiel ;
sélectionner l'une ou l'autre des sorties des multiples mémoires tampon analogiques en question ; et
qui consiste à, en commandant la valeur de la tension d'alimentation à haut potentiel et de la tension d'alimentation à bas potentiel fournies aux mémoires tampon analogiques :
décaler la plage de la tension de sortie des mémoires tampon analogiques soit vers le côté à haut potentiel, soit vers le côté à bas potentiel, en utilisant la contre-tension en tant que référence : et
commander la sélection de l'une ou l'autre des sorties des mémoires tampon analogiques dans laquelle la plage de tension de sortie est décalée.

27. Procédé suivant la revendication 26 qui consiste à :
émettre les tensions échantillonnées et bloquées à l'aide de premier et deuxième moyens de commutation ;
mettre en mémoire tampon les tensions qui sont émises via le premier moyen de commutation à l'aide d'une première mémoire tampon analogique ;
mettre en mémoire tampon la tension qui est émise via le deuxième moyen de commutation à l'aide d'une deuxième mémoire tampon analogique ;
émettre la sortie de la première mémoire tampon analogique à l'aide d'un troisième moyen de commutation qui se met sous tension et hors tension conjointement au deuxième moyen de commutation ; et
émettre la sortie de la deuxième mémoire tampon analogique à l'aide d'un quatrième moyen de commutation qui se met sous tension et hors tension conjointement au premier moyen de commutation ; et
qui consiste à, en commandant la valeur de la, tension d'alimentation à haut potentiel et de la tension d'alimentation à bas potentiel, fournies aux première et deuxième mémoires tampon analogiques :
décaler la plage de tension de sortie des première et deuxième mémoires tampon analogiques, soit vers le côté à haut potentiel, soit vers le côté à bas potentiel, en utilisant la contre-tension en tant que référence, et
commander l'opération de mise sous tension et hors tension des premier à quatrième moyens de commutation.

28. Procédé suivant les revendications 26 ou 27 consistant à émettre en sortie la tension appliquée, vers une ligne de signaux à l'aide d'un moyen d'excitation de signaux et à émettre en sortie vers la ligne de balayage à l'aide du moyen d'excitation de balayage, la tension de sélection pour décider de fournir ou non la tension appliquée en question, à l'élément d'image à cristaux liquides, lorsque la tension appliquée provenant du moyen d'excitation de signaux devient valide, en la retardant séquentiellement exactement d'une période de balayage horizontal, de sorte que la tension de sélection devient efficace une fois que la tension appliquée en provenance du moyen d'excitation de signaux devient valide.
